(19) Europäisches Patentamt
European Patent Office
Office européen des brevets

(11) **EP 2 537 616 B1**

## (12) EUROPÄISCHE PATENTSCHRIFT

(45) Veröffentlichungstag und Bekanntmachung des Hinweises auf die Patenterteilung:
**19.08.2020   Patentblatt 2020/34**

(21) Anmeldenummer: **11170679.2**

(22) Anmeldetag: **21.06.2011**

(51) Int Cl.:
***B23F 5/16*** *(2006.01)*

(54) **Robustes Verfahren zum Wälzschälen und entsprechende Vorrichtung mit Wälzschälwerkzeug**

Robust method for skiving and corresponding device with skiving tool

Procédé robuste de taillage de cylindres et dispositif correspondant doté d'un outil de taillage de cylindres

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.12.2012   Patentblatt 2012/52**

(73) Patentinhaber: **Klingelnberg AG**
**8050 Zürich (CH)**

(72) Erfinder:
• **Marx, Hartmut**
  **8304 Wallisellen (CH)**
• **Vogel, Olaf**
  **76275 Ettlingen (DE)**

(74) Vertreter: **Heusch, Christian et al**
**Ant-IP GmbH**
**Kirchplatz 2**
**82387 Antdorf (DE)**

(56) Entgegenhaltungen:
**WO-A1-2012/098002     DE-A1- 3 915 976**

• **Lindberg, Roy A.: "Processes and Materials of Manufacture, 4th edition", 1. Januar 1990 (1990-01-01), Allyn and Bacon, Massachusetts, XP002665752, ISBN: 0-205-11817-8 Seite 326, * das ganze Dokument ***
• **Awiszus, B. et al: "GRUNDLAGEN DER FERTIGUNGSTECHNIK", 1. Januar 2003 (2003-01-01), FACHBUCHVERLAG LEIPZIG IM CARL HANSER VERLAG, XP009154783, ISBN: 3-446-22057-7 Seiten 123-210, * Seite 150; Abbildungen 4.6,4.7 ***

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der Erfindung ist ein robustes Verfahren zum Wälzschälen einer Verzahnung oder einer anderen periodischen Struktur und eine entsprechende Vorrichtung mit Wälzschälwerkzeug.

Hintergrund der Erfindung, Stand der Technik

Es gibt zahlreiche Verfahren zur Fertigung von Zahnrädern. Bei der spanenden Weichvorbearbeitung unterscheidet man Wälzfräsen (im Englischen hobbing genannt), Wälzstossen (im Englischen gear shaping genannt), Wälzhobeln (im Englischen generating planing genannt) und Wälzschälen (im Englischen power skiving genannt). Das Wälzfräsen und Wälzschälen sind sogenannte kontinuierliche Verfahren, wie im Folgenden näher erläutert wird.

Bei der spanenden Herstellung von Zahnrädern unterscheidet man zwischen dem Einzelteilverfahren (auch intermittierendes Teilverfahren und im Englischen intermitted indexing process oder single indexing process genannt) und dem kontinuierlichen Verfahren, das teilweise auch als kontinuierliches Teilungsverfahren (im Englischen continuous indexing process, oder face hobbing genannt) bezeichnet wird.

Beim kontinuierlichen Verfahren kommt beispielsweise ein Werkzeug mit entsprechenden Messern zum Einsatz, um die Flanken eines Werkstücks zu schneiden. Das Werkstück wird in einer Aufspannung kontinuierlich, d.h. im pausenlosen Verfahren fertig geschnitten. Das kontinuierliche Verfahren basiert auf komplexen, gekoppelten Bewegungsabläufen, bei denen das Werkzeug und das zu bearbeitende Werkstück relativ zueinander eine kontinuierliche Teilungsbewegung ausführen. Die Teilungsbewegung ergibt sich aus dem koordinierten, respektive gekoppelten Antreiben mehrere Achsantriebe einer entsprechenden Maschine.

Beim Einzelteilverfahren wird eine Zahnlücke bearbeitet, dann erfolgen zum Beispiel eine relative Bewegung des Werkzeugs und eine sogenannte Teilungsbewegung (Teilungsdrehung), bei der sich das Werkstück relativ zum Werkzeug dreht, bevor dann die nächste Zahnlücke bearbeitet wird. Es wird so Schritt für Schritt ein Zahnrad gefertigt.

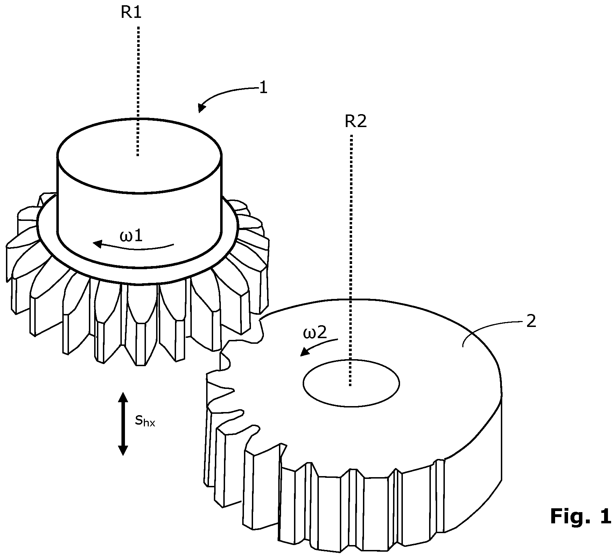

Das eingangs genannte Wälzstossverfahren kann durch ein Zylinderradgetriebe beschrieben oder dargestellt werden, da der Kreuzungswinkel (auch Achskreuzwinkel genannt) zwischen der Rotationsachse R1 des Stosswerkzeugs 1 und der Rotationsachse R2 des Werkstücks 2 Null Grad beträgt, wie in Fig. 1 schematisch dargestellt. Die beiden Rotationsachsen R1 und R2 verlaufen parallel, wenn der Achskreuzwinkel Null Grad beträgt. Das Werkstück 2 und das Stosswerkzeug 1 drehen sich kontinuierlich um ihre Rotationsachsen R2, bzw. R1. Das Stosswerkzeug 1 macht zusätzlich zu der Drehbewegung eine Hubbewegung, die in Fig. 1 durch den Doppelpfeil $s_{hx}$ bezeichnet ist, und nimmt bei dieser Hubbewegung Späne vom Werkstück 2 ab.

Vor einiger Zeit wurde ein Verfahren erneut aufgegriffen, das als Wälzschälen bezeichnet wird. Die Grundlagen sind circa 100 Jahre alt. Eine erste Patentanmeldung mit der Nummer DE 243514 zu diesem Thema geht auf das Jahr 1912 zurück. Nach den ursprünglichen Überlegungen und Untersuchungen der Anfangsjahre wurde das Wälzschälen nicht mehr ernsthaft weiter verfolgt. Es waren bisher aufwendige Prozesse, die teilweise empirisch waren, notwendig, um eine geeignete Werkzeuggeometrie für das Wälzschälverfahren zu finden.

Ungefähr Mitte der 1980er Jahre wurde das Wälzschälen erneut aufgegriffen. Erst mit den heutigen Simulationsverfahren und den modernen CNC-Steuerungen der Maschinen, konnte das Prinzip des Wälzschälens in ein produktives, reproduzierbares und robustes Verfahren umgesetzt werden. Hinzu kommen die hohe Verschleißfestigkeit heutiger Werkzeugmaterialien, die enorm hohe statische und dynamische Steifigkeit und die hohe Güte des Synchronlaufs der modernen Maschinen.

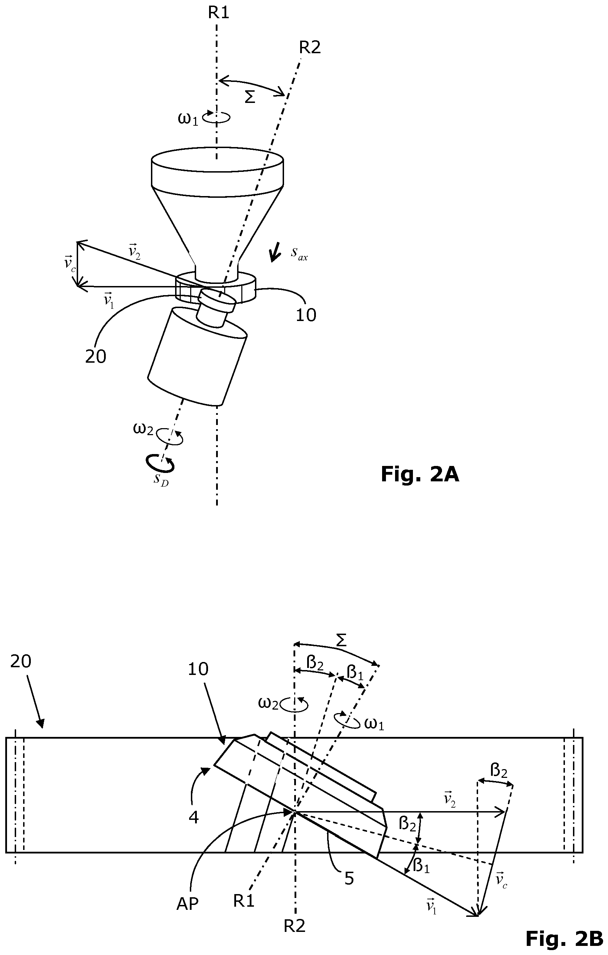

Beim Wälzschälen wird nun, wie in Fig. 2A gezeigt, ein Achskreuzwinkel Σ zwischen der Rotationsachse R1 des Wälzschälzeugs 10 (auch als Schälrad bezeichnet) und der Rotationsachse R2 des Werkstücks 20 vorgegeben, der ungleich Null ist. Die resultierende Relativbewegung zwischen dem Wälzschälwerkzeug 10 und dem Werkstück 20 ist eine Schraubbewegung, die in einen Drehanteil (rotatorischer Anteil) und einen Schubanteil (translatorischer Anteil) zerlegt werden kann. Als antriebstechnisches Analogon kann ein Wälzschraubgetriebe betrachtet werden, wobei der Drehanteil dem Wälzen und der Schubanteil dem Gleiten der Flanken entspricht. Um so größer der Achskreuzwinkel Σ betragsmäßig ist, um so mehr nimmt der für die Bearbeitung des Werkstücks 20 notwendige translatorische Bewegungsanteil zu. Er bewirkt nämlich eine Bewegungskomponente der Schneiden des Wälzschälwerkzeugs 10 in Richtung der Zahnflanken des Werkstücks 20. Beim Wälzschälen wird somit der Gleitanteil der kämmenden Relativbewegung der im Eingriff stehenden Zahnräder des Schraubradersatzgetriebes ausgenutzt, um die Schnittbewegung auszuführen. Beim Wälzschälen ist nur ein langsamer Axialvorschub $s_{ax}$ (auch axialer Vorschub genannt) parallel zur Rotationsachse R2 des Werkstücks 20 erforderlich und es entfällt die sogenannte Stossbewegung, die für das Wälzstossen typisch ist. Beim Wälzschälen tritt somit auch keine Rückhubbewegung auf.

Die Schnittgeschwindigkeit beim Wälzschälen wird direkt von der Drehzahl des Wälzschälwerkzeugs 10 bzw. des Werkstücks 20 und von dem verwendeten Achskreuzwinkel Σ der Rotationsachsen R1 und R2 beeinflusst. Der Achskreuzwinkel Σ und damit der Gleitanteil sollte so gewählt werden, dass für die Bearbeitung des Materials bei gegebener Drehzahl eine optimale Schnittgeschwindigkeit erzielt wird.

Die Bewegungsabläufe und weitere Details eines vorbekannten Wälzschälverfahrens sind der bereits erwähnten schematischen Darstellung in Fig. 2A zu entnehmen. Fig. 2A zeigt das Wälzschälen einer Außenverzahnung an einem zylindrischen Werkstück 20. Das Werkstück 20 und das Werkzeug 10 (hier ein zylindrisches Wälzschälwerkzeug 10) rotieren in entgegengesetzter Richtung, wie in Fig. 2A z.B. anhand der Winkelgeschwindigkeiten $\omega_1$ und $\omega_2$ zu erkennen ist.

Hinzu kommen weitere Relativbewegungen. Es ist der bereits erwähnte Axialvorschub $s_{ax}$ erforderlich, um die gesamte Verzahnbreite des Werkstücks 20 mit dem Werkzeug 10 bearbeiten zu können. Der Axialvorschub bewirkt eine Verschiebung des Werkzeugs 10 gegenüber dem Werkstück 20 in paralleler Richtung zur Rotationsachse R2 des Werkstücks 20. Die bisher übliche Richtung dieser Bewegung des Werkzeugs 10 ist in Fig. 2A mit $s_{ax}$ gekennzeichnet. Falls am Werkstück 20 eine Schrägverzahnung erwünscht ist (d.h. $\beta_2 \neq 0$), wird dem Axialvorschub $s_{ax}$ ein Differential-vorschub $s_D$ überlagert, welcher, wie in Fig. 2A gekennzeichnet, einer zusätzlichen Drehung des Werkstücks 20 um seine Rotationsachse R2 entspricht. Der Differentialvorschub $s_D$ und der Axialvorschub $s_{ax}$ werden am Auslegungspunkt derart aufeinander abgestimmt, dass der resultierende Vorschub des Werkzeugs 10 gegenüber dem Werkstück 20 in Richtung der zu erzeugenden Zahnlücke erfolgt. Zusätzlich kann ein Radialvorschub $s_{rad}$ eingesetzt werden, um etwa die Balligkeit der Verzahnung des Werkstücks 20 zu beeinflussen.

Beim Wälzschälen ergibt sich der Vektor der Schnittgeschwindigkeit $\vec{v}_c$ im Wesentlichen als Differenz der beiden um den Achskreuzwinkel $\Sigma$ zueinander geneigten Geschwindigkeitsvektoren $\vec{v}_1$ und $\vec{v}_2$ der Rotationsachsen R1, R2 von Werkzeug 10 und Werkstück 20. $\vec{v}_1$ ist der Geschwindigkeitsvektor am Umfang des Werkzeugs 10 und $\vec{v}_2$ ist der Geschwindigkeitsvektor am Umfang des Werkstücks 20. Die Schnittgeschwindigkeit $\vec{v}_c$ des Wälzschälprozesses kann durch den Achskreuzwinkel $\Sigma$ und die Drehzahl im Schraubradersatzgetriebe verändert werden. Bei konventionellen Wälzschälverfahren schließen der Vektor $\vec{s}_{ax}$ des Axialvorschubs $S_{ax}$ und der Vektor $\vec{v}_c$ der Schnittgeschwindigkeit $\vec{v}_c$ einen spitzen Winkel ein. Der wie bereits erwähnt relativ langsame Axialvorschub $s_{ax}$ hat beim Wälzschälverfahren nur einen kleinen Einfluss auf die Schnittgeschwindigkeit $v_c$, der vernachlässigt werden kann. Deshalb ist der Axialvorschub $S_{ax}$ in dem Vektordiagramm mit den Vektoren $\vec{v}_1$ $\vec{v}_2$ und $\vec{v}_c$ in Fig. 2A nicht berücksichtigt.

In Fig. 2B ist das Wälzschälen einer Außenverzahnung eines Werkstücks 20 mit einem konischen Wälzschälwerkzeug 10 gezeigt. In Fig. 2B sind wiederum der Achskreuzwinkel $\Sigma$, der Vektor der Schnittgeschwindigkeit $\vec{v}_c$, die Geschwindigkeitsvektoren $\vec{v}_1$ am Umfang des Werkzeugs 10 und $\vec{v}_2$ am Umfang des Werkstücks 20, sowie der Schrä-gungswinkels $\beta_1$ des Werkzeugs 10 und der Schrägungswinkel $\beta_2$ des Werkstücks 20 gezeigt. Der Schrägungswinkel $\beta_2$ hier ungleich Null. Der Zahnkopf des Werkzeugs 10 ist in Fig. 2B mit dem Bezugszeichen 4 gekennzeichnet. Die Zahnbrust ist in Fig. 2B mit dem Bezugszeichen 5 gekennzeichnet. Die beiden Rotationsachsen R1 und R2 schneiden sich nicht, sondern sind windschief zueinander angeordnet. Bei einem konischen Wälzschälwerkzeug 10 wird der Auslegungspunkt AP bisher üblicherweise auf dem Gemeinlot der beiden Rotationsachsen R1 und R2 gewählt, da ein Ankippen des Wälzschälwerkzeugs 10 zur Beschaffung von Freiwinkeln nicht notwendig ist. Der Auslegungspunkt AP fällt hier mit dem sogenannten Berührpunkt zusammen. In diesem Auslegungspunkt AP berühren sich die Wälzkreise des Schraubwälzersatzgetriebes.

Beim Wälzschälen kommt ein Werkzeug 10 zum Einsatz, das mindestens eine geometrisch bestimmte Schneide umfasst. Die Schneide/Schneiden sind in Fig. 2A und Fig. 2B nicht gezeigt. Die Form und Anordnung der Schneiden gehören zu denjenigen Aspekten, die in der Praxis bei einer konkreten Auslegung berücksichtigt werden müssen.

Ausserdem kommt dem Werkzeug selbst beim Wälzschälen eine große Bedeutung zu. Das Wälzschälwerkzeug 10 hat in dem in Fig. 2A gezeigten Beispiel die Form eines geradverzahnten Stirnrads. Die Außenkontur des Grundkörpers in Fig. 2A ist zylindrisch. Sie kann aber auch kegelig (auch konisch genannt) sein, wie in Fig. 2B gezeigt. Da der oder die Zähne des Wälzschälwerkzeugs 10 über die gesamte Schneidkantenlänge in Eingriff kommen, benötigt jeder Zahn des Werkzeugs 10 an der Schneidkante einen ausreichenden Freiwinkel.

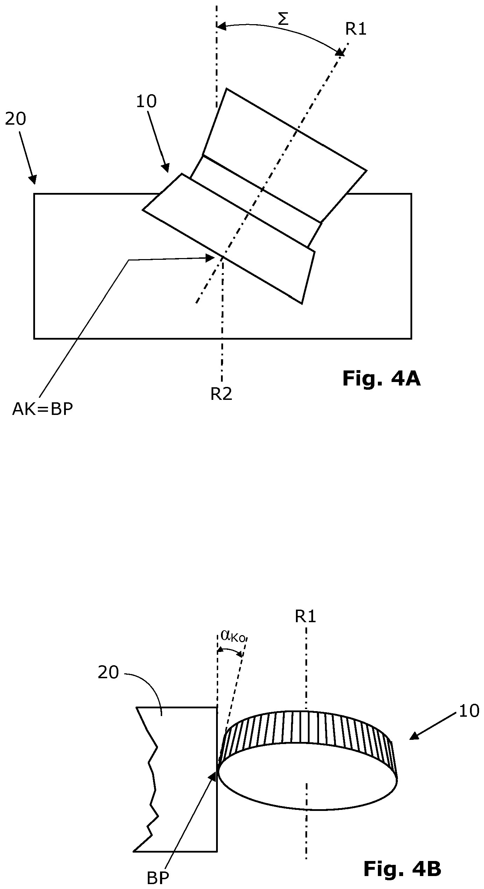

Wenn man von einem gerad- oder schrägverzahnten konischen Wälzschälwerkzeug 10 ausgeht, wie in den Figuren 4A und 4B gezeigt, dann erkennt man, dass ein solches Wälzschälwerkzeug 10 sogenannte konstruktive Freiwinkel aufgrund der konischen Grundform des Wälzschälwerkzeugs 10 aufweist. D.h. die Freiwinkel am Kopf und an den Flanken des konischen Wälzschälwerkzeugs 10 sind aufgrund der Geometrie des Wälzschälwerkzeugs 10 vorgegeben. Das Profil der Schneiden eines konischen Wälzschälwerkzeugs 10 muss jedoch bestimmte Bedingungen erfüllen, um überhaupt ein Nachschleifen zu ermöglichen. In den Figuren 4A und 4B ist ein konisches Wälzschälwerkzeug 10 beim Aussenverzahnen eines Werkstücks 20 gezeigt. Der sogenannte konstruktive Freiwinkel $\alpha_{Ko}$ am Schneidenkopf des konischen Wälzschälwerkzeugs 10 ist in Fig. 4B zu erkennen. Der Achskreuzpunkt AK und der Berührpunkt BP der Wälzkreise von Wälzschälwerkzeug 10 und Werkstück 20 fallen bei der Fig. 4A zusammen und liegen auf dem Gemeinlot (nicht in den Figuren 4A und 4B zu erkennen bzw. gezeigt) der Rotationsachsen R1 und R2.

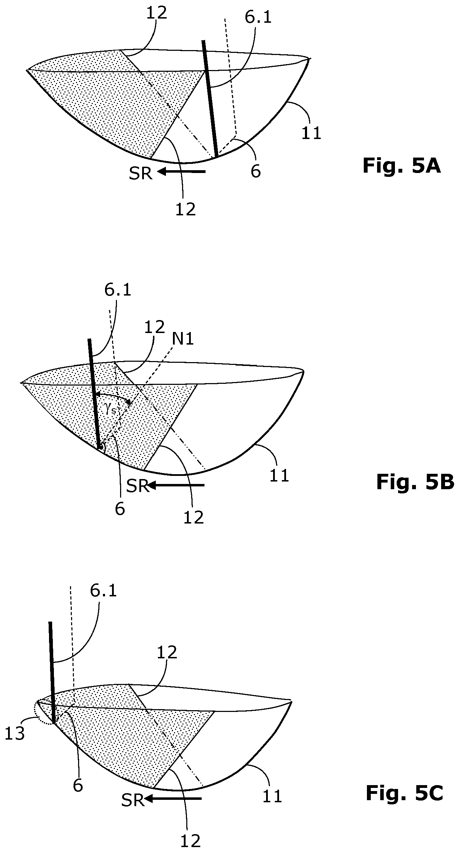

Die Bewegung eines Schneidzahns 6 eines Wälzschälwerkzeugs 10 durch das Material eines Werkstücks 20 beim konventionellen Wälzschälen ist in den Figuren 5A bis 5C schematisch dargestellt. Die Figuren 5A bis 5C zeigen den effektiven Spanwinkelverlauf am Schneidenkopf, respektive am Schneidzahn 6 eines Wälzschälwerkzeugs 10, über den Schnittverlauf beim Vollschnitt. In Fig. 5B ist der effektive Spanwinkel $\gamma_s$ am Schneidenkopf skizzenhaft eingezeichnet, welcher im dargestellten Moment negativ ist. Der effektive Spanwinkel $\gamma_s$ entspricht in der gewählten projizierten Darstellung in etwa dem Winkel zwischen der Spanfläche der Schneide 6.1 und der Normalen N1 im Berührpunkt zwischen Spanfläche und Wanne 11. Aufgrund der Überlagerung von gekoppelten, d.h. miteinander synchronisierten Drehbewegungen des Wälzschälwerkzeugs 10 um die erste Rotationsachse R1 und des Werkstücks um die zweite Rotationsachse R2, und von Vorschubbewegungen des Wälzschälwerkzeugs 10 relativ zum Werkstück 20, ergibt sich bei einer Aufzeichnung der Gesamtheit der Bahnpunkte einer Schneide eine Art Wannen- oder Trogform, wie in den Figuren 5A bis 5C, 6, 7, 8A, 9A, 10A bis 10C, 11A, 11B, 12A und 12B gezeigt. Die entsprechende Wanne ist in den Figuren 5A bis 5C, 6, 7 und 8A mit dem Bezugszeichen 11 gekennzeichnet.

Fig. 5A zeigt die Relativbewegung des Schneidzahns 6 des Wälzschälwerkzeugs 10 im Material des Werkstücks 20 in einer ersten Momentaufnahme. Die Orientierung und Lage der Schneide 6.1 des Schneidzahns 6 ist durch einen dicken Strich dargestellt. Die Wanne 11 ergibt sich aus der Gesamtheit der in der Lücke 22 des Werkstücks 20 liegenden Bahnpunkte der Schneide 6.1 des Schneidzahns 6 für einen Eingriff des Schneidzahns 6 in diese Lücke 22. Der darauffolgende Eingriff eines weiteren Schneidzahns (dies kann derselbe oder ein anderer Schneidzahn des Werkzeugs sein) erzeugt ebenso eine Wanne 11, welche auf Grund des Axialvorschubs und des daran gekoppelten Differentialvorschubs in axialer Richtung innerhalb der Lücke 22 versetzt ist. Die Wanne 11 bewegt sich also während des Wälzschälens schrittweise (zumindest virtuell) durch das Material des Werkstücks 20. Fig. 5A zeigt eine Linie 12, die die Wanne 11 in einen linken und einen rechten Abschnitt unterteilen. Der verdeckte Teil der Linie 12 ist strichpunktiert gezeigt. Die Linie 12 grenzt die Überlagerung von zwei Wannen voneinander ab, welche sich in ihrer Position um den Vorschub zwischen zwei unmittelbar aufeinanderfolgenden Schneidzahneingriffen unterscheiden. D.h. die Linie 12 kennzeichnet die Schnittkurve der beiden Wannen. Für unendlich kleinen Axialvorschub entspricht diese Schnittkurve der sogenannten Erzeugendenlinie. Die gesamte Zahnlücke kann man sich als Menge solcher Erzeugendenlinien denken, die in Vorschubrichtung VR durch das Material des Werkstücks 20 wandern. Im konventionellen Wälzschäl-Bearbeitungsprozess mit axialem Vorschub $s_{ax}$ wird durch die bewegte Schneide 6.1 nur im Bereich ab der Erzeugendenlinie 12 (d.h. im gezeigten Beispiel links von der Erzeugendenlinie 12) Material am Werkstück 20 abgetragen. Dieser Bereich wo der Materialabtrag statt findet, ist in den Figuren 5A bis 5C grau dargestellt. Im weißen Bereich der Wanne 11, d.h. in Schnittrichtung SR betrachtet vor der Erzeugendenlinie 12 (d.h. im gezeigten Beispiel rechts von der Erzeugendenlinie 12), wurde das Material bereits durch den vorherigen Werkzeugeingriff abgetragen.

Fig. 5B zeigt eine zweite Momentaufnahme der Simulation, wobei sich der Schneidzahn 6 des Wälzschälwerkzeugs 10 im Material des Werkstücks 20 gegenüber der Situation in Fig. 5A ein Stück weiter nach links in Schnittrichtung SR bewegt hat.

Fig. 5C zeigt eine dritte Momentaufnahme der Simulation, wobei sich der Schneidzahn 6 des Wälzschälwerkzeugs 10 im Material des Werkstücks 20 gegenüber der Situation in Fig. 5B noch ein Stück weiter nach links in Schnittrichtung SR bewegt hat. In Fig. 5C ist gut zu erkennen, dass die Spanfläche der Schneide 6.1 des Schneidzahns 6 in Bezug zu der Wanne 11 einen spitzen Winkel einschließt. Der entsprechende Bereich ist in Fig. 5C mit dem Bezugszeichen 13 gekennzeichnet. Im Bereich 13 ergibt sich also ein extrem negativer effektiver Spanwinkel, wie bereits erwähnt.

Während des Wälzschälprozesses wird insbesondere der effektive Kopfspanwinkel am Schneidenkopf somit immer negativer, wie bereits im Zusammenhang mit den Figuren 5A - 5C erwähnt. Der Anstellwinkel des Schneidzahns 6 zum gedachten Lückengrund am Werkstück 20 bleibt beim Wälzschälen in etwa gleich. Die Kopfschneide des Schneidzahns 6 "schleift" über den Boden der Wanne 11.

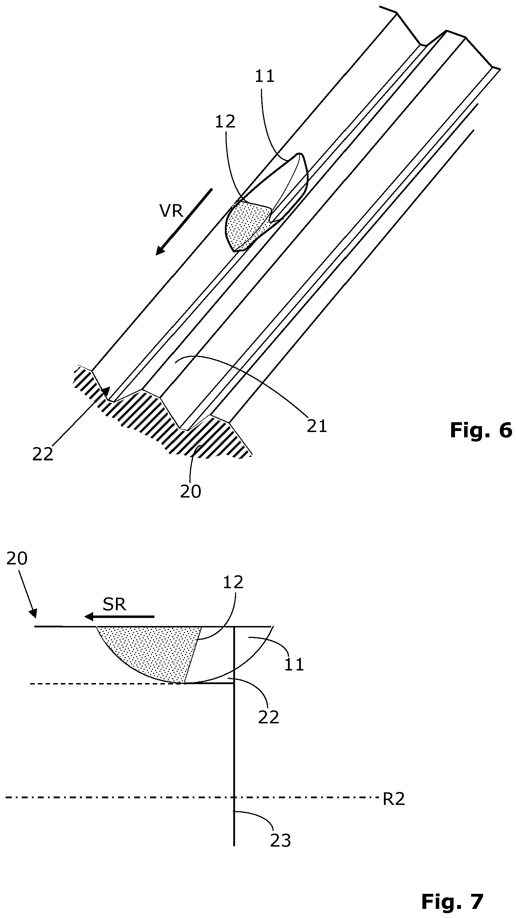

In Fig. 6 ist ein Abschnitt eines Werkstücks 20 mit mehreren Zähnen 21 und Zahnlücken 22 gezeigt. Wenn man nun den gesamten Bewegungsverlauf bei der Wälzschälbearbeitung eines Werkstücks 20 betrachtet, ist zu erkennen, dass sich die Wanne 11 durch eine Zahnlücke 22 hindurch bewegt, bis die Zahnlücke 22 komplett fertig gestellt ist. Die Bewegung der Wanne 11 durch die Zahnlücke 22 hindurch ist durch einen Richtungspfeil VR angedeutet, der in Vorschubrichtung deutet. Diese Vorschubrichtung setzt sich, wie bereits erwähnt, im Wesentlichen aus Axialvorschub $s_{ax}$ und optional dem Differentialvorschub $s_D$, der im Falle einer Schrägverzahnung erforderlich ist, zusammen. Der Bereich der Wanne 11 in dem der Materialabtrag statt findet, ist in Fig. 6 grau dargestellt.

Fig. 7 zeigt eine seitliche Ansicht eines Werkstücks 20, wobei die Wanne 11 bereits ein Stück weit, ausgehend von der Stirnfläche 23, in Material des Werkstücks 20 eingedrungen ist und einen ersten Bereich einer Zahnlücke 22 gefertigt hat. In Fig. 7 ist die Schnittrichtung, d.h. die Richtung des Schnittgeschwindigkeitsvektors $\vec{v}_c$ im Auslegungspunkt, mit dem Bezugzeichen SR gekennzeichnet. Der Bereich der Wanne 11 in dem der Materialabtrag statt findet, ist in Fig. 7 grau dargestellt.

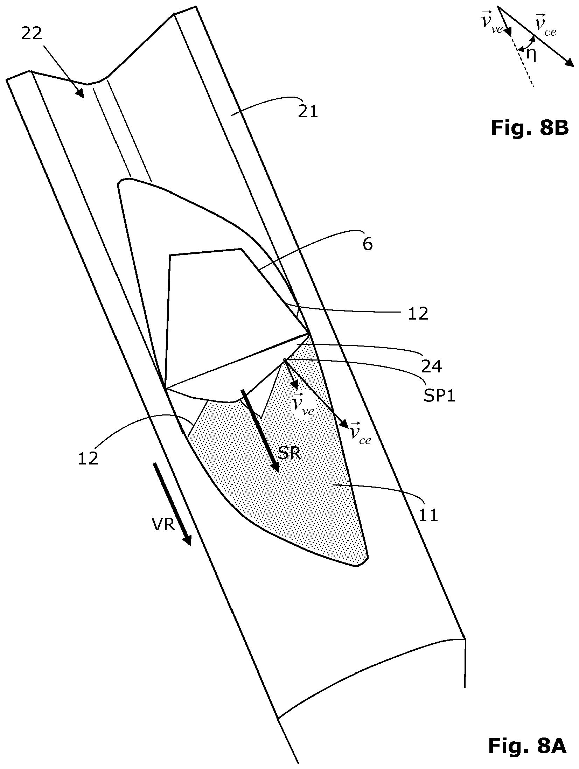

Fig. 8A zeigt einen Abschnitt eines Werkstücks in einer Draufsicht, wobei die Position der Wanne 11 beim Durchlaufen einer Zahnlücke 22 in stark schematisierter Form gezeigt ist. Anhand von Fig. 8A ist zu erkennen, wie die Spanfläche 24 eines Schneidzahns 6 in der Wanne 11 momentan positioniert ist und im grauen Bereich der Wanne 11 Material abträgt. Gezeigt sind die Schnittrichtung SR und die Vorschubrichtung VR im Auslegungspunkt AP. Beide Richtungen SR und VR verlaufen auslegungsgemäß in Lückenrichtung und damit parallel zueinander, beim konventionellen Wälzschälen insbesondere gleichsinnig zueinander parallel. Weiterhin sind in Fig. 8A für einen beliebigen Schneidenpunkt SP1 der momentane Vektor $\vec{v}_{ce}$ der effektiven Schnittgeschwindigkeit sowie der momentane Vektor $\vec{v}_{ve}$ der effektiven Vorschubgeschwindigkeit (letztere zugunsten der Darstellbarkeit überhöht) dargestellt. Auf Grund der komplexen Relativbewegung des Wälzschälwerkzeugs 10 gegenüber dem Werkstück 20 und der sich dabei verändernden Eingriffsverhältnisse kann zum einen die momentane Schnittrichtung $\vec{v}_{ce}$ eines Schneidenpunktes SP1 geringfügig von der Schnittrichtung VR am Auslegungspunkt AP und zum anderen die momentane Vorschubrichtung $\vec{v}_{ve}$ eines Schneidenpunktes SP1 geringfügig von der Vorschubrichtung VR am Auslegungspunkt AP abweichen. Man kann sich auch vorstellen, dass die effektiven Schnittrichtungen $\vec{v}_{ce}$ aller Schneidenpunkte während der Spanabnahme innerhalb eines spitzen Kegels um die Schnittrichtung SR schwanken und dass die effektiven Vorschubrichtungen $\vec{v}_{ve}$ aller Schneidenpunkte während der Spanabnahme innerhalb eines spitzen Kegels um die Vorschubrichtung VR schwanken.

Fig. 8B zeigt den Winkel η zwischen dem effektiven Schnittrichtungsvektor $\vec{v}_{ce}$ und dem effektiven Vorschubrichtungsvektor $\vec{v}_{ve}$ für einen beliebigen Schneidenpunkt und Zeitpunkt während der Spanabnahme nach Fig. 8A.

Das Dokument WO 2012/098002 A1 , das zum Stand der Technik gemäß Artikel 54(3) EPÜ zählt, beschreibt einen Ansatz zum Wälzschälen, bei dem man in Rahmen des üblichen Wälzschälens eine Vorschubbewegung des Bearbeitungswerkzeugs vorgibt, deren Bewegungsrichtung der Richtung der Schneidbewegung entgegen gerichtet ist. Die Bewegungsrichtung der Vorschubbewegung verläuft parallel zur Werkstückachse.

Eigene Untersuchungen bisheriger Wälzschälverfahren haben gezeigt, dass es zu einem deutlichen Verschleiß oder gar zu einem plötzlichen Versagen des Wälzschälwerkzeugs kommen kann. Genauere Betrachtungen und Auswertungen haben ergeben, dass während des Wälzschälens generell negative effektive Spanwinkel auftreten und unter Umständen auch extrem negative Spanwinkel am Wälzschälwerkzeug auftreten können. Simulationen der Gesamtheit der Bahnpunkte der Schneiden des Wälzschälwerkzeugs, welche in das Material des Werkstückstücks schneiden, haben ergeben, dass beim Vollschnitt in der Lücke insbesondere der effektive Kopfspanwinkel vom Beginn der Spanbildung bis hin zum Austritt des Wälzschälwerkzeugs aus der Lücke immer negativer wird. D.h. genauer, dass während des Abtragens eines Spanes beim üblichen Wälzschälen die Spandicke beginnend von der Erzeugendenlinie zunimmt, wobei der effektive Spanwinkel kontinuierlich von anfangs ca. Null Grad kleiner wird. Dieser effektive Spanwinkel kann am Ende der Bildung eines Spanes am Schneidenkopf beispielsweise bis zu -60 Grad oder in sehr ungünstigen Fällen sogar noch weniger als -60 Grad betragen. Dieser Aspekt kann zu dem beobachteten Verschleiß des Wälzschälwerkzeugs führen.

Obige Untersuchungen des Spanwinkels während des Wälzschälens gelten insbesondere für die Erzeugung eines vollen Spanes im laufenden Wälzschälprozess.

Aufgabe der vorliegenden Erfindung ist es, ein Verfahren und eine Vorrichtung zum spanenden Bearbeiten der Zahnflanken eines Zahnrades oder anderer periodischer Strukturen bereitzustellen, das sich durch eine Reduktion der Produktionskosten pro Zahnrad auszeichnet. Andererseits sollen das Verfahren, das vorgeschlagen wird, und die Vorrichtung robust sein und sich für den Einsatz in der Serienfertigung, zum Beispiel in der Automobilbranche, eignen.

Insbesondere geht es darum, die Werkzeugkosten möglichst niedrig zu halten, indem die Standzeit der Werkzeuge verbessert wird.

Diese Aufgabe wird gemäß der vorliegenden Erfindung durch ein Verfahren gelöst, das hier als Gleichlauf-Wälzschälverfahren bezeichnet wird.

Das Gleichlauf-Wälzschälverfahren lässt sich im Zusammenhang mit der Herstellung rotationssymmetrischer, periodischer Strukturen einsetzen.

Bei dem Gleichlauf-Wälzschälverfahren werden folgende Schritte ausgeführt:

- Drehen des Wälzschälwerkzeugs um eine erste Rotationsachse,
- gekoppeltes Drehen des Werkstücks um eine zweite Rotationsachse,
- Ausführen einer axialen Vorschubbewegung des Wälzschälwerkzeugs in Bezug zu dem Werkstück in einer Richtung parallel zur zweiten Rotationsachse,

wobei die beiden Rotationsachsen während des Wälzschälens mit einem Achskreuzwinkel windschief relativ zueinander angestellt sind. Das Gleichlauf-Wälzschälverfahren zeichnet sich dadurch aus, dass sich an den Schneiden eine effektive Schnittgeschwindigkeit und aufgrund der relativen Vorschubbewegung eine effektive Vorschubgeschwindigkeit ergeben, wobei die Richtung der effektiven Schnittgeschwindigkeit und die Richtung der effektiven Vorschubgeschwindigkeit einen stumpfen Winkel einschließen.

Bei dem Gleichlauf-Wälzschälverfahren schließt die Richtung, der sich während der Spanabnahme an den Schneiden ergebenden effektiven Schnittgeschwindigkeit mit der sich ergebenden effektiven Vorschubgeschwindigkeit den genannten stumpfen Winkel ein.

Kennzeichnend für das Gleichlauf-Wälzschälen der Erfindung ist, dass die relativen Bewegungsabläufe (Relativbewegungen genannt) zwischen Werkstück und Wälzschälwerkzeug so vorgegeben und ausgeführt werden, dass die Schnittbedingungen an den Schneidkanten der Schneidzähne des Wälzwerkzeugs möglichst in einem optimalen Bereich liegen. Als optimaler Bereich wird ein Bereich angesehen, der effektive Spanwinkel am Wälzschälwerkzeug ermöglicht, die positiv sind und auf ca. Null Grad zurück gehen können. Beim Gleichlauf-Wälzschälen können eventuell gegen Ende der Spanbildung auch leicht negative Spanwinkel im Bereich von wenigen Grad auftreten. Im Unterschied zum Gegenlauf-Wälzschälen nimmt die Spandicke bei der Spanbildung ab.

Die Erfindung basiert darauf, dass die Relativbewegung des Wälzschälwerkzeugs in Bezug zu dem Werkstück so vorgegeben wird, dass es gegenüber dem herkömmlichen Wälzschälen, das im Folgenden auch als Gegenlauf-Wälzschälen bezeichnet wird, zu deutlich günstigeren Spanungsbedingungen kommt.

Durch das Gleichlauf-Wälzschälen wird das Auftreten negativer und vor allem auch extrem negativer effektiver Spanwinkel an den Schneidzähnen des Wälzschälwerkzeugs vermieden.

Beim Gleichlauf-Wälzschälen kann Material am Werkstück fortschreitend abgetragen werden, bis die Zähne oder die anderen periodischen Strukturen vollständig ausgebildet sind.

Gemäss Erfindung kann der relativen Vorschubbewegung eine radiale Bewegung überlagert sein, um z.B. die Balligkeit der Zähne, gemäss der technischen Lehre der deutschen Patentanmeldung DE3915976 A1, die die Basis für die Oberbegriffe der Ansprüche 1 und 9 bildet, zu beeinflussen.

Das Gleichlauf-Wälzschälen kann an einem unverzahnten Werkstück, vorzugsweise bei einer Weichbearbeitung, zum Einsatz kommen.

Das Gleichlauf-Wälzschälen kann an einem vorverzahnten Werkstück, vorzugsweise nach einer Weichbearbeitung, zum Einsatz kommen.

Während des Gleichlauf-Wälzschälens vollführt das sich drehende Wälzschälwerkzeug eine axiale Vorschubbewegung in Bezug auf das sich drehende Werkstück in Richtung der zweiten Rotationsachse, wobei diese axiale Vorschubbewegung gegenläufig zur Schnittrichtung verläuft.

Die Zahnlücken können gemäss Erfindung direkt auf die volle Tiefe gebracht werden und müssen in diesem Fall nicht in einer Mehrschnittstrategie erzeugt werden.

Das Gleichlauf-Wälzschälen kann im Rahmen eines Mehrschnitt-Wälzschälverfahrens zum Einsatz kommen. Gemäss Erfindung können den axialen Bewegungen radiale Bewegungen überlagert sein, um eine Mehrschnittstrategie umzusetzen, oder um einlaufende oder auslaufende Zahnnuten gemäss der technischen Lehre der internationalen Patentanmeldung WO 2010/060733 A1 zu erzeugen.

Gemäss Erfindung geht es primär um das Wälzschälen von durchgängigen Verzahnungen, d.h. es geht hier nicht um das Wälzschälen von Zahnnuten, die am Anfang und/oder Ende geschlossen sind. Es können mit dem Gleichlauf-Wälzschälen aber auch Zahnnuten hergestellt werden, die am Anfang und/oder Ende geschlossen sind. Es können auch einlaufende bzw. auslaufende Zahnnuten erzeugt werden.

Gemäss Erfindung wird die Standzeit der Wälzschälwerkzeuge deutlich verbessert.

Die Rotationsachse des Wälzschälwerkzeugs ist beim Gleichlauf-Wälzschälen schräg gegenüber der Rotationsachse des Werkstücks angestellt, d.h. der Achskreuzwinkel $\Sigma$ ist ungleich Null.

Zusätzlich kann das Wälzschälwerkzeug während des Wälzschälens in Richtung auf das Werkstück hingeneigt oder vom Werkstück weggeneigt sein.

Bei dem Gleichlauf-Wälzschälen handelt es sich um ein kontinuierliches, spanabhebendes Verfahren.

Vorzugsweise kommt bei allen Ausführungsformen ein schälradartiges Wälzschälwerkzeug zum Einsatz, das sich deutlich von Stirnmesserkopf-Werkzeugen unterscheidet.

Gemäss Erfindung weist das Wälzschälwerkzeug einen schälradartigen Werkzeugbereich auf, der Schneiden hat, die in Form von Schneidzähnen ausgeprägt sind, die gerade oder schräg nach aussen ragen.

Gemäss Erfindung weist das Wälzschälwerkzeug einen schälradartigen Werkzeugbereich auf, der die Form eines Schneidrads, vorzugsweise die Form eines Scheibenschneidrads, eines Schaftschneidrads oder Scheiben-Glockenschneidrads (z.B. gemäss DIN 3972 oder DIN 5480) hat.

Die schälradartigen Wälzschälwerkzeuge gemäss Erfindung können als sogenannte Vollwerkzeuge ausgelegt sein, d.h. es handelt sich um Werkzeuge, die im Wesentlichen einstückig ausgeführt sind. Besonders bevorzugt sind für alle Ausführungsformen der Erfindung Messerkopf-Werkzeuge (hier Stabmesser-Schälrad genannt), die einen Messerkopfgrundkörper haben, der mit Messereinsätzen, vorzugsweise in Form von Stabmessern, bestückt ist. Besonders bevorzugt sind für alle Ausführungsformen der Erfindung Schneidplatten-Werkzeuge, die einen Messerkopfgrundkörper haben, der mit Schneidplatten bestückt ist.

Die Schneidenzähne der Wälzschälwerkzeuge sind so gestaltet, dass sie kollisionsfrei durch die erste Wannenhälfte kommen. Dies ist umso einfacher, je flacher die Wanne einläuft. Deshalb sind für das Gleichlauf-Wälzschälen große Achskreuzungswinkel vorteilhaft, die zu länger gestreckten Wannen führen.

Die Erfindung bietet gegenüber dem konventionellen Gegenlauf-Wälzschälen eine Reihe von Vorteilen, die im Folgenden zusammenfassend aufgeführt sind:

- verbesserte Spanungssituation;
- positive effektive Spanwinkel im Vergleich zu den negativen bis stark negativen effektiven Spanwinkeln beim konventionellen Wälzschälen (insbesondere am Schneidenkopf);
- kein zusammenlaufender Span, sondern Spanbildungsbeginn am Schneidenkopf mit Verteilung über Flanken;
- die Spanungsdicke nimmt zum Ende hin ab;
- geringerer Werkzeugverschleiss;
- längere Standzeit der Werkzeuge;
- geringere Werkzeugstückkosten;
- deutlich reduziertes Werkzeugversagen;
- je nach Konstellation ergibt sich ein besserer Spanabfluss;
- je nach Situation ergibt sich eine bessere Oberflächenqualität der Zahnflanken;
- bessere Wirtschaftlichkeit.

Eine Kombination aus Gegenlauf-Wälzschälen und Gleichlauf-Wälzschälen bringt Zeitvorteile bei einer Bearbeitung in einer Mehrschnittstrategie.

Das erfindungsgemässe Verfahren kann sowohl im Zusammenhang mit einer Trocken- als auch einer Nassbearbeitung durchgeführt werden.

Das erfindungsgemässe Verfahren kann zur Weich- und/oder Hartbearbeitung eingesetzt werden.

Das erfindungsgemässe Verfahren kann nicht nur im Zusammenhang mit dem Herstellen von Außenverzahnungen eingesetzt werden. Es kann auch vorteilhaft im Zusammenhang mit dem Herstellen von Innenverzahnungen eingesetzt werden.

ZEICHNUNGEN

Weitere Einzelheiten und Vorteile der Erfindung werden im Folgenden anhand von Ausführungsbeispielen und mit Bezug auf die Zeichnung beschrieben. In allen schematischen Zeichnungen sind, der Einfachheit der Darstellung halber, Werkstück und Wälzschälwerkzeug auf die Situation am Wälzkreis (bzw. am Werkstück auf den Wälzzylinder) reduziert. Die dargestellten Verhältnisse gelten aber auch für die ganze Verzahnung mit einer Zahnhöhe.

FIG. 1   zeigt eine schematische Darstellung eines Stossrads mit zylindrischer Außenkontur im Eingriff mit einem außenverzahnten Werkstück beim Wälzstossen;

FIG. 2A   zeigt eine schematische Darstellung eines geradverzahnten Schälrads mit zylindrischer Außenkontur im Eingriff mit einem außenverzahnten Werkstück beim Wälzschälen;

FIG. 2B   zeigt eine schematische Darstellung eines schrägverzahnten Schälrads mit konischer Außenkontur im Eingriff mit einem außenverzahnten Werkstück beim Wälzschälen;

FIG. 4A   zeigt eine schematische Achskreuzprojektion (Berührebenenprojektion) eines konischen Wälzschälwerkzeugs beim Wälzschälen eines außenverzahnten Werkstücks, wobei ein Achskreuzwinkel vorgegeben ist;

FIG. 4B   zeigt eine schematische Achskreuzseitenprojektion (Berührebenenseitenprojektion) des konischen Wälzschälwerkzeugs und Werkstücks nach Fig. 4A;

FIG. 5A   zeigt das Ergebnis einer Simulation der Relativbewegung eines Schneidzahns eines Wälzschälwerkzeugs im Material eines Werkstücks beim Gegenlauf-Wälzschälen in einer ersten Momentaufnahme;

FIG. 5B   zeigt eine zweite Momentaufnahme der Simulation, wobei sich der Schneidzahn des Wälzschälwerkzeugs im Material des Werkstücks gegenüber der Situation in Fig. 5A ein Stück weiter in Schnittrichtung nach links bewegt hat;

FIG. 5C   zeigt eine dritte Momentaufnahme der Simulation, wobei sich der Schneidzahn des Wälzschälwerkzeugs im Material des Werkstücks gegenüber der Situation in Fig. 5B ein Stück weiter in Schnittrichtung nach links bewegt hat;

FIG. 6   zeigt einen Abschnitt eines Werkstücks mit mehreren Zähnen und Zahnlücken, wobei eine Wanne gemäss der Figuren 5A bis 5C beim Gegenlauf-Wälzschälen durch die Zahnlücke wandert;

**FIG. 7** zeigt einen Abschnitt eines Werkstücks in einer seitlichen Ansicht in stark schematisierter Form, wobei die Wanne im gezeigten Moment beim Gegenlauf-Wälzschälen bereits ein Stück weit in Schnittrichtung ins Material des Werkstücks gewandert ist;

**FIG. 8A** zeigt einen Abschnitt eines Werkstücks in einer Draufsicht, wobei die Position der Wanne beim Erzeugen einer Zahnlücke in stark schematisierter Form im Gegenlauf-Wälzschälen gezeigt ist;

**FIG. 8B** zeigt eine schematische Vektordarstellung des Gegenlauf-Wälzschälens nach Fig. 8A;

**FIG. 9A** zeigt einen Abschnitt eines Werkstücks in einer Draufsicht, wobei die Position der Wanne beim Erzeugen einer Zahnlücke in stark schematisierter Form beim erfindungsgemässen Gleichlauf-Wälzschälen gezeigt ist;

**FIG. 9B** zeigt eine schematische Vektordarstellung des Gleichlauf-Wälzschälens nach Fig. 9A;

**FIG. 10A** zeigt einen Abschnitt eines Werkstücks in einer Draufsicht, wobei die Position der Wanne in einer ersten Momentaufnahme am Anfang des Erzeugens einer Zahnlücke in stark schematisierter Form beim erfindungsgemässen Gleichlauf-Wälzschälen gezeigt ist;

**FIG. 10B** zeigt einen Abschnitt des Werkstücks nach Fig. 10A in einer Draufsicht, wobei in der gezeigten zweiten Momentaufnahme die Wanne weiter in das Material des Werkstücks vorgedrungen ist;

**FIG. 10C** zeigt einen Abschnitt des Werkstücks nach Fig. 10A in einer Draufsicht, wobei in der gezeigten dritten Momentaufnahme die Wanne fast das Ende des Werkstücks erreicht hat und die Lücke nahezu fertig verzahnt wurde;

**FIG. 11A** zeigt einen Abschnitt des Werkstücks in einer Draufsicht, wobei im gezeigten Moment die Position der Wanne stirnseitig in das Material des Werkstücks eintritt und das Erzeugen einer Zahnlücke beginnt;

**FIG. 11B** zeigt einen Abschnitt eines Werkstücks nach Fig. 11A in einer seitlichen Ansicht, wobei die Position der Wanne im Material eines Werkstücks beim Gleichlauf-Wälzschälen in stark schematisierter Form gezeigt und ein Stück weit ins Material des Werkstücks vorgedrungen ist;

**FIG. 12A** zeigt eine stark schematisierte Ansicht einer Wanne samt einer Schneide eines Messerstabs, wobei der effektive Spanwinkel im gezeigten Moment deutlich positiv ist;

**FIG. 12B** zeigt eine stark schematisierte Ansicht einer Wanne samt einer Schneide eines Messerstabs, wobei der effektive Spanwinkel im gezeigten Moment ca. Null Grad beträgt;

**FIG. 13** zeigt einen Abschnitt eines Werkstücks beim Wälzschälen, wobei zu erkennen ist, wie ein Messerstab mit Schneidzahn eines nicht gezeigten Wälzschälwerkzeugs durch eine Zahnlücke geführt wird;

**FIG. 14** zeigt eine perspektivische Ansicht eines innenverzahnten Zylinderwerkstücks beim Wälzschälen mit einem Stabmesser-Schälrad, gemäss Erfindung;

**FIG. 15** zeigt eine perspektivische Ansicht eines innenverzahnten Zylinderwerkstücks beim Wälzschälen mit einem Vollwerkzeug als Schälrad, gemäss Erfindung;

**FIG. 16** zeigt eine stark perspektivische Ansicht einer erfindungsgemässen Maschine mit einem Wälzschälwerkzeug beim Verzahnen eines innenverzahnten Werkstücks.

DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Rotationssymmetrische periodische Strukturen sind zum Beispiel Zahnräder mit Innen- und/oder Außenverzahnung. Es kann sich aber zum Beispiel auch um Bremsscheiben, Kupplungs- oder Getriebeelemente und dergleichen handeln. Insbesondere eignen sich die Wälzschälwerkzeuge zur Herstellung von Ritzelwellen, Schnecken, Hohlrädern, Zahnradpumpen, Ringgelenknaben (Ringgelenke finden zum Beispiel im Kraftfahrzeugsektor Verwendung, um die Kraft von einem Differential auf ein Fahrzeugrad zu übertragen), Keilwellenverbindungen, Schiebemuffen, Riemenscheiben und dergleichen. Die periodischen Strukturen werden hier auch als periodisch wiederkehrende Strukturen bezeichnet.

Im Folgenden ist primär von Zahnrädern, Zähnen und Zahnlücken die Rede. Die Erfindung lässt sich aber auch auf andere Bauteile mit anderen periodischen Strukturen übertragen, wie oben erwähnt. Bei diesen anderen Bauteilen geht es in diesem Fall dann nicht um Zahnlücken sondern zum Beispiel um Nuten oder Rillen.

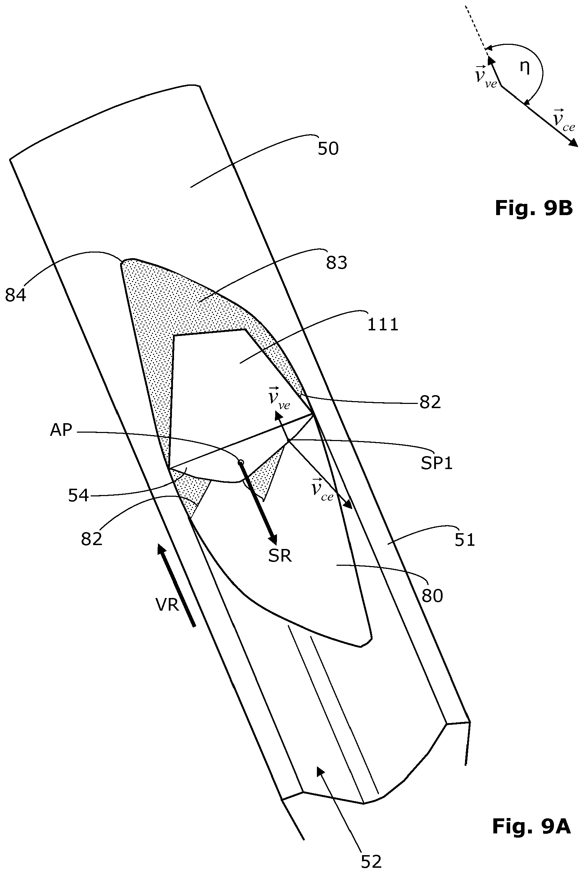

Die Erfindung nutzt die Ergebnisse von Untersuchungen und Simulationen, wie eingangs erwähnt. Gemäss Erfindung erfolgt das Wälzschälen, wie in den Figuren 9A und 9B gezeigt. Fig. 9A zeigt einen Abschnitt eines Werkstücks 50 in einer Draufsicht, wobei die Position der Wanne 80 beim Durchlaufen einer Zahnlücke 52 in stark schematisierter Form gezeigt ist. Anhand von Fig. 9A kann man die Vorschubrichtung VR und die Schnittrichtung SR am Auslegungspunkt AP, die momentane Lage eines Schneidzahns 111 und die momentane Lage einer Spanfläche 54 erkennen. Die Vorschubrichtung VR verläuft bei einem geradverzahnten Werkstück 50 in axialer Richtung (d.h. parallel zur Rotationsachse R2). Bei einem schrägverzahnten Werkstück 50, ergibt sich die Vorschubrichtung VR im Wesentlichen aus dem Axialvorschub $s_{ax}$ und dem an diesen gekoppelten Differentialvorschub $s_D$ des Werkstücks 50 (bei einem geradverzahnten Werkstück 50 ist der Differentialvorschub $s_D$ gleich Null). Gezeigt sind in Fig. 9A die Schnittrichtung SR und die Vorschubrichtung VR im Auslegungspunkt AP. Beide Richtungen SR und VR verlaufen auslegungsgemäß in Lückenrichtung und damit parallel zueinander, wobei beim Gleichlauf-Wälzschälen die Schnittrichtung SR und die Vorschubrichtung VR gegenläufig zueinander sind. Gemäss Erfindung schliesst der Vektor der sich während der Spanabnahme ergebenden effektiven Schnittgeschwindigkeit $\vec{v}_{ce}$ und der Vektor der sich dabei ergebenden effektiven Vorschubgeschwindigkeit $\vec{v}_{ve}$ für jeden Schneidenpunkt einen stumpfen Winkel $\eta$ ein. In Fig. 9A ist eine Projektion der beiden Vektoren $\vec{v}_{ce}$ und $\vec{v}_{ve}$ gezeigt, wobei der Vektor $\vec{v}_{ve}$ zu Gunsten der Sichtbarkeit überhöht dargestellt ist. Fig. 9B hingegen zeigt die Draufsicht der Ebene, die durch die beiden Vektoren $\vec{v}_{ce}$ und $\vec{v}_{ve}$ aufgespannt wird. In Fig. 9B ist der stumpfe Winkel $\eta$ zu erkennen, der hier beispielhafte 160 Grad beträgt.

Eine Linie 82 an der Wanne 80 trennt den Bereich einer ersten Schnittbahn von dem Bereich einer zweiten Schnittbahn, wie bereits beschrieben. D.h. diese Linie 82 entspricht der bereits erwähnten Erzeugendenlinie. Anhand von Fig. 9A ist zu erkennen, dass die Werkzeugschneide des Schneidzahns 111 bei der Bewegung durch die zu generierende Lücke 52 die bereits beschriebene wannenförmige Fläche 80 beschreibt. Die grau dargestellte Zone der Wanne 80 stellt denjenigen Bereich dar, in dem beim Gleichlauf-Wälzschälen Material abgetragen wird.

Das erfindungsgemässe Wälzschälverfahren, das hier auch als Gleichlauf-Wälzschälverfahren bezeichnet wird, ist zum Wälzschälen eines Werkstücks 50 oder 70 mit rotationssymmetrischer, periodischer Struktur unter Einsatz eines Wälzschälwerkzeugs 100 ausgelegt. Das Wälzschälwerkzeug 100, das hier zum Einsatz kommt, hat mehrere Schneiden 111. Das Gleichlauf-Wälzschälverfahren umfasst die folgenden Schritte:

- Drehen des Wälzschälwerkzeugs 100 um eine erste Rotationsachse R1,
- gekoppeltes Drehen des Werkstücks 50, 70 um eine zweite Rotationsachse R2,
- Ausführen einer axialen Vorschubbewegung des Wälzschälwerkzeugs 100 in Bezug zu dem Werkstück 50, 70 in einer Richtung $\vec{s}_{ax}$ parallel zur zweiten Rotationsachse R2,

wobei die beiden Rotationsachsen R1, R2 während des Wälzschälens mit einem Achskreuzwinkel $\Sigma$ windschief relativ zueinander angestellt sind. Das Gleichlauf-Wälzschälverfahren zeichnet sich dadurch aus, dass sich an den Schneiden 111 eine effektive Schnittgeschwindigkeit $\vec{v}_{ce}$ und aufgrund der relativen Vorschubbewegung eine effektive Vorschubgeschwindigkeit $\vec{v}_{ve}$ ergeben, wobei die Richtung der effektiven Schnittgeschwindigkeit $\vec{v}_{ce}$ und die Richtung der effektiven Vorschubgeschwindigkeit $\vec{v}_{ve}$ einen stumpfen Winkel $\eta$ einschließen.

Bei dem Gleichlauf-Wälzschälverfahren schließt die Richtung, der sich während der Spanabnahme an den Schneiden 111 ergebenden effektiven Schnittgeschwindigkeit $\vec{v}_{ce}$ mit der sich ergebenden effektiven Vorschubgeschwindigkeit $\vec{v}_{ve}$ den genannten stumpfen Winkel $\eta$ ein.

Vorzugsweise liegt dieser stumpfe Winkel $\eta$ in einem Winkelbereich zwischen einschließlich 180 Grad und 90 Grad, d.h. 180 Grad $\geq \eta > 90$ Grad. Besonders bevorzugt ist der Winkelbereich zwischen 180 $\geq \eta \geq 120$ Grad.

Gemäss Erfindung findet der Materialabtrag im grauen Bereich 83 der Wanne 80 statt. Die Spanbildung setzt beim Gleichlauf-Wälzschälen direkt am vordersten Wannenrand 84 (in Vorschubrichtung VR betrachtet) ein und endet in etwa bei der Wannenmitte, d.h. im Bereich der Erzeugendenlinie 82 bzw. im Bereich des Übergangs von dem grauen Bereich 83 zu dem weiß dargestellten Bereich.

Gemäss Erfindung wird die der Schnittrichtung SR entgegengesetzte Vorschubrichtung VR durch einen gegenläufigen, d.h. im Vergleich zum herkömmlichen Gegenlauf-Wälzschälen umgekehrten, Axialvorschub des Wälzschälwerkzeugs 100 relativ zu dem Werkstück 50, 70 erzeugt.

Der effektive Achskreuzwinkel $\Sigma_{eff}$ liegt vorzugsweise bei allen Ausführungsformen im folgenden Bereich: -60° $\leq \Sigma_{eff} \leq 60°$, $\Sigma_{eff} \neq 0°$.

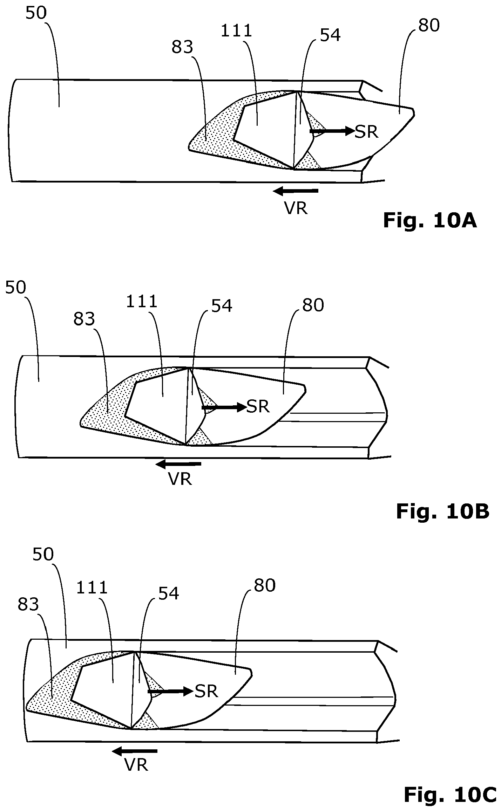

Die Figuren 10A bis 10C zeigen drei Momentaufnahmen des Gleichlauf-Wälzschälens, wobei die Wanne 80 von rechts kommend ins Material des Werkstücks 50 eindringt und sich im gezeigten Beispiel sukzessive nach links bewegt. Die erzeugte Lücke 52 wird somit von Bild zu Bild immer ein Stück länger.

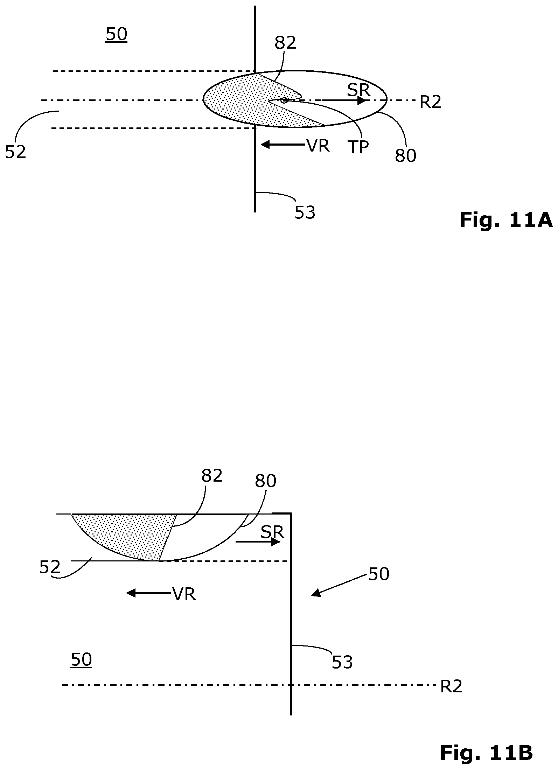

In den Figuren 11A, 11B sind zwei weitere Momentaufnahmen gezeigt. Es ist hier anzumerken, dass die Wannen 80 in den Figuren 11A, 11B und folgende bewusst spiegelsymmetrisch dargestellt sind. In der Praxis können die Wannen 80 jedoch auch eine asymmetrische Form aufweisen, wenn z.B. der Neigungswinkel δ ungleich Null ist. Fig. 11A zeigt eine Momentaufnahme in Draufsicht wo der Materialabtrag am Werkstück 50 soeben begonnen hat. Fig. 11B zeigt eine spätere Momentaufnahme in Seitenansicht. Die Wanne 80 ist ein Stück weit ins Material des Werkstücks 50 eingedrungen.

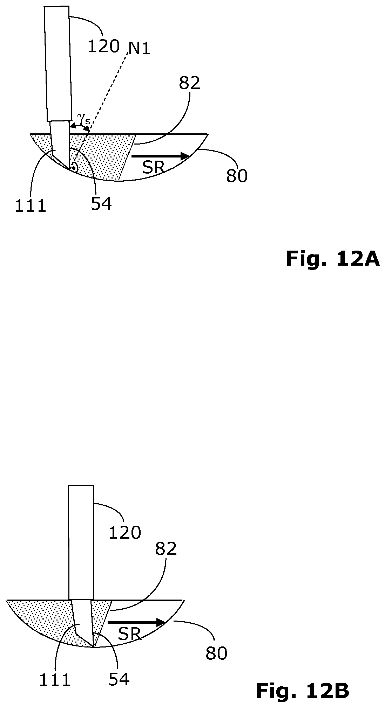

Fig. 12A zeigt eine stark schematisierte Ansicht einer Wanne 80 samt einer Schneide 111 eines Messerstabs 120, wobei der effektive Spanwinkel $\gamma_s$ am Schneidenkopf im gezeigten Moment deutlich positiv ist. Der effektive Spanwinkel $\gamma_s$ am Schneidenkopf ist in dieser projizierten Darstellung der Winkel zwischen der Spanfläche 54 der Schneide 111 und der Normalen N1 im Berührpunkt zwischen Spanfläche 54 und Wanne 80.

Fig. 12B zeigt eine stark schematisierte Ansicht einer Wanne 80 samt einer Schneide 111 eines Messerstabs 120, wobei der Spanwinkel $\gamma_s$ im gezeigten Moment ca. Null Grad beträgt. In Fig. 12B liegt diese Normale ungefähr in der Ebene der Spanfläche 54 und ist daher nicht sichtbar. Die Erzeugendenlinie 82 geht übrigens immer durch den tiefsten Punkt TP der Wanne 80.

Vorzugsweise liegt der Betrag des effektiven Spanwinkels $\gamma_s$ während der Spanabnahme bei allen Ausführungsformen der Erfindung im Bereich zwischen 60 und -10 Grad, d.h. der effektive Spanwinkel $\gamma_s$ kann leicht ins Negative gehen. Besonders vorzugsweise liegt der effektive Spanwinkel $\gamma_s$ im Bereich zwischen 45 und ± 0 Grad.

Wie beschrieben, ergibt die Überlagerung der gekoppelten Drehbewegungen des Wälzschälwerkzeugs 100 um die erste Rotationsachse R1 und des Werkstücks 50, 70 um die zweite Rotationsachse R2, und der Vorschubbewegungen des Wälzschälwerkzeugs 100 relativ zum Werkstück 50, 70, bei einer Aufzeichnung der Gesamtheit der Bahnpunkte einer Schneide 111 eine Art Wannen- oder Trogform, wie in den Figuren 9A, 10A, 10B, 10C, 11A, 11B, und 12A, 12B gezeigt. Die entsprechende Wanne ist in diesen Figuren mit dem Bezugszeichen 80 gekennzeichnet.

Diese Wanne 80 ergibt sich aus der Gesamtheit der in der Lücke 52 des Werkstücks 50 (oder 70) liegenden Bahnpunkte der Schneide des Schneidzahns 111 für einen Eingriff des Schneidzahns 111 in diese Lücke 52. Der darauffolgende Eingriff eines weiteren Schneidzahns 111 (dies kann derselbe oder ein anderer Schneidzahn 111 des Wälzschälwerkzeugs 100 sein) erzeugt ebenso eine Wanne 80, welche auf Grund des Axialvorschubs und des daran gekoppelten Differentialvorschubs (falls dieser ungleich Null ist) in axialer Richtung in der Lücke 52 versetzt ist. Die Wanne 80 bewegt sich also während des Wälzschälens schrittweise (zumindest virtuell) durch das Material des Werkstücks 50. Die Linie 82 grenzt die Überlagerung von zwei Wannen voneinander ab, welche sich in ihrer Position um den Vorschub zwischen zwei unmittelbar aufeinanderfolgenden Schneidzahneingriffen unterscheiden. D.h. die Linie 82 kennzeichnet die Schnittkurve der beiden Wannen. Für unendlich kleinen Axialvorschub entspricht diese Schnittkurve der sogenannten Erzeugendenlinie. Die gesamte Zahnlücke 52 kann man sich als Menge solcher Erzeugendenlinien denken, die in Schnittrichtung durch das Material des Werkstücks 50 wandern.

Am Anfang des Gleichlauf-Wälzschälens kann die Wanne 80 radial eingestochen werden, oder die Wanne kann axial, d.h. von der Stirnseite 53 her kommend, eingestochen werden.

Das Wälzschälen ist ein komplizierter Prozess, bei dem sich die Schnittbedingungen an den Schneiden des Wälzschälwerkzeugs 100 permanent ändern, wie anhand der Wanne 80 dargestellt wurde. Gemäss Erfindung werden die relativen Bewegungsabläufe so optimiert, dass ungünstige negative Spanwinkel und Spanungsbedingungen möglichst vermieden werden.

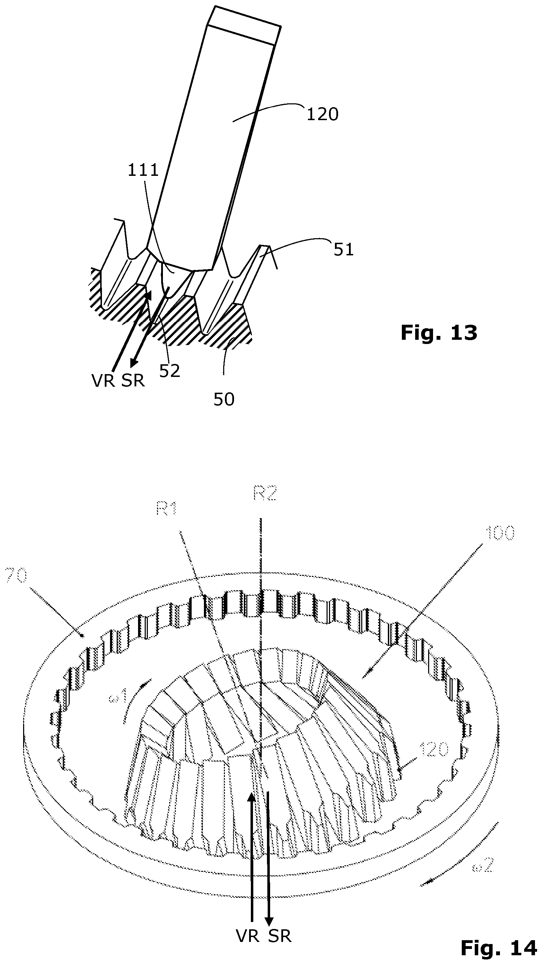

Fig. 13 zeigt einen Abschnitt eines Werkstücks 50 beim Gleichlauf-Wälzschälen, wobei zu erkennen ist, wie ein Messerstab 120 mit Schneidzahn 111 durch eine Zahnlücke 52 geführt wird. Das Wälzschälwerkzeug 100 (Stabmesser-Schälrad 100 genannt), das in Fig. 13 nicht gezeigt ist, umfasst einen Grundkörper zur Aufnahme mehrerer Messerstäbe 120. Hier ist jedoch nur ein Messerstab 120 gezeigt.

Fig. 14 zeigt eine perspektivische Ansicht eines innenverzahnten Zylinderwerkstücks 70 beim Gleichlauf-Wälzschälen mit einem Stabmesser-Schälrad 100, gemäss Erfindung. In Fig. 14 sind nur die Messerstäbe 120 gezeigt. Der Grundkörper, in dem die Messerstäbe 120 gelagert sind, ist ausgeblendet. Die Messerstäbe 120 sind hier in dem nicht gezeigten Grundkörper in einer konischen Konstellation angeordnet. In Fig. 14 ist die Vorschubrichtung VR des Wälzschälwerkzeugs 100 gezeigt, welche für das hier gezeigte geradverzahnte Werkstück 70 parallel zur Rotationsachse R2 verläuft. Die Vorschubrichtung VR verläuft entgegen gesetzt zur Schnittrichtung SR, wie durch die beiden gleich langen aber gegenläufigen Pfeile in Fig. 14 gezeigt.

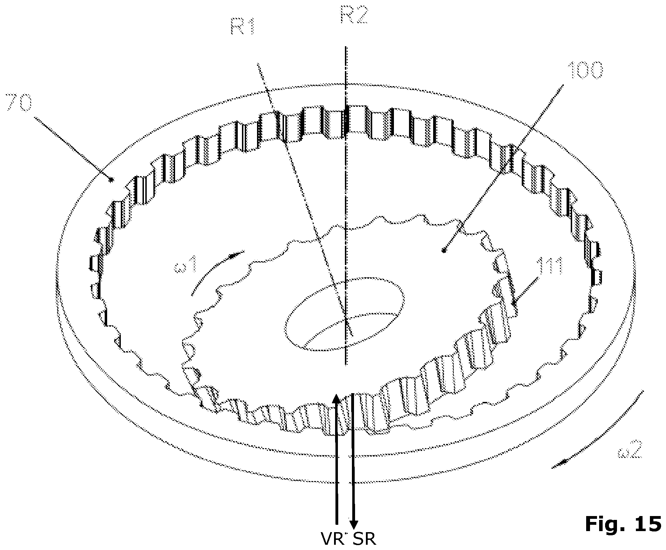

Fig. 15 zeigt eine perspektivische Ansicht eines weiteren innenverzahnten Zylinderwerkstücks 70 beim Gleichlauf-Wälzschälen mit einem Vollwerkzeug 100 als Schälrad, gemäss Erfindung. Das Schälrad 100 weist mehrere Schneidzähne 111 auf, wie gezeigt. Das Schälrad 100 ist vorzugsweise einstückig ausgeführt, d.h. die Schneidzähne 111 sind ein fester Bestandteil des scheibenförmigen Grundkörpers. In Fig. 15 ist die Vorschubrichtung VR des Wälzschälwerkzeugs 100 gezeigt, welche für das hier gezeigte geradverzahnte Werkstück 70 parallel zur Rotationsachse R2 verläuft. Die Vorschubrichtung VR verläuft entgegen gesetzt zur Schnittrichtung SR, wie durch die beiden gleich langen aber gegenläufigen Pfeile in Fig. 14 gezeigt.

In den folgenden Absätzen werden weitere Erläuterungen zum erfindungsgemässen Wälzschälen gegeben.

Grundsätzlich entspricht die Relativbewegung zwischen dem Wälzschälwerkzeug 100 und dem Werkstück 50, 70 beim Wälzschälen einem Schraubradgetriebe, auch Wälzschraubgetriebe genannt. Es handelt sich bei dem Schraubradgetriebe um ein räumliches Getriebe.

Die Grundauslegung des Wälzschälprozesses erfolgt deshalb, wie bei der Auslegung von Getrieben, an einem sogenannten Auslegungspunkt AP (siehe z.B. Fig. 2B). Unter Grundauslegung wird hier die Festlegung der räumlichen Anordnung und Bewegung des Wälzschälwerkzeugs 100 bzgl. des Werstücks 50, 70 (Kinematik) sowie die Festlegung der geometrischen Grundgrößen des Wälzschälwerkzeugs 100 wie etwa Durchmesser und Schrägungswinkel (Werkzeuggrundgeometrie) verstanden.

An dem Auslegungspunkt AP werden die geometrischen und kinematischen Eingriffsverhältnisse möglichst optimal gestaltet. Die Eingriffsverhältnisse ändern sich mit zunehmender Entfernung vom Auslegungspunkt AP. Das Wälzschälen stellt in diesem Zusammenhang ein sehr komplexes Verfahren dar, bei dem sich die Eingriffverhältnisse auch bei der Bewegung der Schneide kontinuierlich ändern. Jedoch lassen sich über die Eingriffsverhältnisse am Auslegungspunkt AP die sich ändernden Eingriffsverhältnisse gezielt beeinflussen.

Deshalb kommt der korrekten Auslegung der Eingriffsverhältnisse am Auslegungspunkt AP eine wesentliche Bedeutung bei der Auslegung von Wälzschälprozessen zu.

**Begriffe zur Achsanordnung:**

Es gibt mehrere Begriffe, die zur Festlegung der Achsanordnung erforderlich sind. Diese Begriffe werden in der folgenden Tabelle beschrieben.

| | |
|---|---|
| Gemeinlot | Wälzschälprozesse zeichnen sich durch sich im Raum kreuzende Rotationsachsen R2 und R1 von Werkstück 50, 70 und Wälzschälwerkzeug 100 aus. Zu den beiden sich kreuzenden Rotationsachsen R2 und R1 lässt sich eindeutig ein Gemeinlot angeben. |
| Achskreuzprojektion, Achskreuzpunkt | Die Betrachtung von Werstück 50, 70 und Wälzschälwerkzeug 100 entlang des Gemeinlots GL in Richtung des Gemeinlotvektors wird als Achskreuzprojektion (siehe z.B. Fig. 4A) bezeichnet. In der Achskreuzprojektion schneiden sich die projizierten Rotationsachsen R1 und R2 im Achskreuzpunkt AK, welcher dem in der Projektion zum Punkt reduzierten Gemeinlot entspricht. |
| Achskreuzwinkel | Der Achskreuzwinkel $\Sigma$ ist der betragsmäßig kleinere Winkel, der von den beiden Rotationsachsen R1 und R2 eingeschlossen wird. Er wird in der Achskreuzprojektion sichtbar. Es gilt im Zusammenhang der vorliegenden Erfindung $-90° < \Sigma < 90°$, $\Sigma \neq 0°$. Der Achskreuzwinkel $\Sigma$ ist vorzeichenbehaftet. Das Vorzeichen ist in der Achskreuzprojektion wie folgt ohne Beschränkung der Allgemeinheit festgelegt: Für Außenverzahnungen ist der Achskreuzwinkel $\Sigma$ positiv, wenn die projizierte Rotationsachse R1 um den Achskreuzpunkt AK mathematisch positiv um $\Sigma$ bezüglich der projizierten Rotationsachse R2 verdreht ist. Für Innenverzahnungen ist er positiv, wenn die projizierte Rotationsachse R1 um den Achskreuzpunkt AK mathematisch negativ um $|\Sigma|$ bezüglich der projizierten Rotationsachse R2 verdreht ist. |

**Begriffe zum Kontakt zwischen Wälzschälwerkzeug und Werkstück:**

Es gibt mehrere Begriffe, die zur Beschreibung des Kontakts zwischen Wälzschälwerkzeug 100 und Werkstück 50, 70 erforderlich sind. Diese Begriffe werden in der folgenden Tabelle beschrieben.

| | |
|---|---|
| Wälzkreise | Die Wälzkreise von Werkstück 50, 70 und Wälzschälwerkzeug 100 berühren sich im Auslegungspunkt AP, der deshalb auch Berührpunkt BP genannt wird. |
| | Der Wälzkreis des Werkstücks 50, 70 (auch Werkstückwälzkreis genannt) liegt in einer Ebene, die senkrecht zur Rotationsachse R2 des Werkstücks 50, 70 liegt. Der Mittelpunkt des Wälzkreises liegt auf der Rotationsachse R2 des Werkstücks 50, 70. Der Durchmesser des Werkstückwälzkreises lautet $d_{w2}$. Der Wälzkreis des Wälzschälwerkzeugs 100 (auch Werkzeugwälzkreis genannt) liegt in einer Ebene, die senkrecht zur Rotationsachse R1 des Wälzschälwerkzeugs 100 liegt. Der Mittelpunkt des Wälzkreises W1 liegt auf der Rotationsachse R1 des Wälzschälwerkzeugs 100. Der Durchmesser des Werkzeugwälzkreises lautet $d_{w1}$. |
| Bezugsebenen | Die Werkzeugbezugsebene ist diejenige Ebene, in der der Werkzeugwälzkreis liegt. |
| Spanhalbraum, Schneidenhalbraum | Die Werkzeugbezugsebene teilt den 3-dimensionalen Raum in zwei Hälften. Der Spanhalbraum sei diejenige Hälfte, in die die aus dem Schneidenmaterial des Wälzschälwerkzeugs 100 herauszeigenden Spanflächennormalen hineinzeigen. Die andere Hälfte sei mit Schneidenhalbraum bezeichnet. Die Schneiden des Wälzschälwerkzeugs 100 erstrecken sich also im Wesentlichen im Schneidenhalbraum, können aber auch in den Spanhalbraum hineinreichen, wobei die Spanflächen dem Spanhalbraum zugewandt sind. |
| Geschwindigkeitsvektoren | Im Auslegungspunkt AP kann der aus der Werkstückdrehung um R2 resultierende Geschwindigkeitsvektor $\vec{v}_2$ des zugehörigen Werkstückpunktes angegeben werden. Er liegt in der Werkstückbezugsebene, tangential zum Werkstückwälzkreis. Der Betrag ist $v_2 = \lvert \pi \cdot d_{w2} \cdot n_2 \rvert$ mit der vorzeichenbehafteten Werkstückdrehzahl $n_2$. Im Auslegungspunkt AP kann ebenso der aus der Werkzeugdrehung um R1 resultierende Geschwindigkeitsvektor $\vec{v}_1$ des zugehörigen Werkzeugpunktes angegeben werden. Er liegt in der Werkzeugbezugsebene, tangential zum |
| | Werkzeugwälzkreis. Der Betrag ist $v_1 = \lvert \pi \cdot d_{w1} \cdot n_1 \rvert$ mit der vorzeichenbehafteten Werkzeugdrehzahl $n_1$. Der Schnittgeschwindigkeitsvektor $\vec{v}_c$ am Auslegungspunkt AP ist eine Funktion der Durchmesser $d_{w1}$ und $d_{w2}$, sowie der Drehzahlen $n_1$ und $n_2$ und des Achskreuzwinkels $\Sigma$: $\vec{v}_c = f(d_{w1}, d_{w2}, n_1, n_2, \Sigma)$. Der Schnittgeschwindigkeitsvektor $\vec{v}_c$ wird hier auch als resultierender Schnittgeschwindigkeitsvektor bezeichnet, da er sich aus einer vektoriellen Überlagerung der beiden Geschwindigkeitsvektoren $\vec{v}_1$ und ergibt $\vec{v}_2$. |
| effektive Geschwindigkeitsvektoren | Die effektive Schnittgeschwindigkeit in einem beliebigen Schneidenpunkt SP1 wird durch den Vektor $\vec{v}_{ce}$ der effektiven Schnittgeschwindigkeit bezeichnet. Die effektive Vorschubgeschwindigkeit in einem beliebigen Schneidenpunkt SP1 wird durch den Vektor $\vec{v}_{ve}$ der effektiven Vorschubgeschwindigkeit bezeichnet |
| Berührradiusvektoren | Vom Auslegungspunkt AP kann das Lot auf die Rotationsachse R2 des Werkstücks 50, 60, 70 gefällt werden. Der zugehörige Lotfußpunkt entspricht dem Schnittpunkt zwischen Werkstückbezugsebene und Werkstückrotationsachse R2. Der Berührradiusvektor $\vec{r}_2$ des Werkstücks 50, 60, 70 ist bei Innenverzahnungen der Vektor vom Lotfußpunkt zum Auslegungspunkt AP, bei Außenverzahnungen der Vektor vom Auslegungspunkt AP zum Lotfußpunkt. Seine Länge ist $\lvert d_{w2} \rvert /2$. Vom Auslegungspunkt AP kann das Lot auf die Rotationsachse R1 des Wälzschälwerkzeugs 100 gefällt werden. Der zugehörige Lotfußpunkt entspricht dem Schnittpunkt zwischen Werkzeugbezugsebene und Werkzeugrotationsachse R1. Der Vektor vom Lotfußpunkt zum Auslegungspunkt AP heißt Berührradiusvektor $\vec{r}_1$ des Werkzeugs 100. Seine Länge ist $d_{w1}/2$. |
| Berührebene | Die beiden Geschwindigkeitsvektoren $\vec{v}_2$ und $\vec{v}_1$ spannen die |

(fortgesetzt)

| | |
|---|---|
| | sogenannte Berührebene auf. Der Schnittgeschwindigkeitsvektor $\vec{v}_c$ liegt auch in der Berührebene. In dieser Berührebene berühren sich die Wälzkreise von Werkstück 50, 70 und Wälzschälwerkzeug 100, und zwar im Auslegungspunkt AP. Darüber hinaus berühren sich in dieser Berührebene auslegungsgemäß auch die theoretische Wälzfläche der Verzahnung von Werkstück 50, 70 und der Wälzkreis von Wälzschälwerkzeug 100. Genauer gesagt, ist die Berührebene tangential zur erwähnten Wälzfläche der Verzahnung von Werkstück 50, 70, und zwar im Auslegungspunkt AP. |
| Wälzfläche, Bezugswälzfläche | Die Wälzfläche einer Verzahnung wird auch Bezugswälzfläche genannt. Sie geht durch den Auslegungspunkt AP, ist rotationssymmetrisch bezüglich der Rotationsachse R2 des Werkstücks 50, 70 und spiegelt einen Teil der Grundgeometrie der Verzahnung wieder. Der Wälzkreis des Werkstücks ist Teil der Wälzfläche der Verzahnung von Werkstück 50, 70. Für die hier detailliert beschriebenen und in den Figuren gezeigten zylindrischen Verzahnungen ist die Wälzfläche ein Zylinder, für kegelige Verzahnungen ein Kegel, für plane Verzahnungen eine Ebene und für allgemeine räumliche Verzahnungen wie z.B. bei Hypoidrädern ein Hyperboloid. Die Ausführungen, die im Folgenden im Zusammenhang mit zylindrischen Verzahnungen gemacht werden, lassen sich entsprechend auf andere Verzahnungen übertragen. |
| Berührebenennormale | Die Berührebenennormale $\vec{n}$ sei derjenige im Auslegungspunkt AP verankerte Normalenvektor der Berührebene, der in die Verzahnung des Werkstücks 50, 70 hineinzeigt, d. h. vom Kopfbereich zum Fussbereich der Verzahnung zeigt. Bei Aussenverzahnungen am Werkstück 50, 70 zeigt die Berührebenennormale $\vec{n}$ somit zur Rotationsachse R2 des Werkstücks 50, 70, während sie bei Innenverzahnungen von ihr wegzeigt. Für zylindrische Verzahnungen zeigt die Berührebenennormale |
| | in dieselbe Richtung wie der Berührradiusvektor $\vec{r}_2$ des Werkstücks 50, 70, d.h. $\vec{n}$ und $\vec{r}_2$ unterscheiden sich nur durch ihre Länge. |
| Berührebenenprojektion | Die Betrachtung von Werkstück 50, 70 und Wälzschälwerkzeug 100 in Richtung des Berührradiusvektors $\vec{r}_2$ des Werkstücks 50, 60, 70 wird als Berührebenenprojektion bezeichnet. In der Berührebenenprojektion schneiden sich die projizierten Rotationsachsen R1 und R2 im Auslegungspunkt AP bzw. Berührpunkt BP. |
| Effektiver Achskreuzwinkel | Der effektive Achskreuzwinkel $\Sigma_{eff}$ ist der von den beiden Geschwindigkeitsvektoren $$\cos(\Sigma_{eff}) = \frac{\vec{v}_2 \cdot \vec{v}_1}{\left\|\vec{v}_2\right\|\left\|\vec{v}_1\right\|}.$$ $\vec{v}_2$ und $\vec{v}_1$ eingeschlossene Winkel gemäß Gemäss Erfindung gilt - 90° < $\Sigma_{eff}$ < 90°, $\Sigma_{eff} \neq 0°$. Der effektive Achskreuzwinkel $\Sigma_{eff}$ ist wie der Achskreuzwinkel $\Sigma$ vorzeichenbehaftet. Das Vorzeichen ist wie folgt ohne Beschränkung der Allgemeinheit festgelegt: Für Außenverzahnungen ist der effektive Achskreuzwinkel $\Sigma_{eff}$ positiv, wenn die Geschwindigkeitsvektoren $\vec{v}_1$ und $\vec{v}_2$ und die Berührebenennormale $\vec{n}$ in dieser Reihenfolge ein Rechtssystem bilden. Für Innenverzahnungen ist er positiv, wenn die Geschwindigkeitsvektoren $\vec{v}_1$ und $\vec{v}_2$ und die Berührebenennormale $\vec{n}$ in dieser Reihenfolge ein Linkssystem bilden. Für nicht-plane Verzahnungen entspricht der effektive Achskreuzwinkel $\Sigma_{eff}$ der senkrechten Projektion des Achskreuzwinkels $\Sigma$ auf die Berührebene, also dem Achskreuzwinkel $\Sigma$ in der Berührebenenprojektion. |
| Neigungswinkel | Der Neigungswinkel $\delta$ beschreibt die Neigung der Werkzeugbezugsebene und damit des Wälzschälwerkzeugs 100 bzgl. der Berührebene. |

**Weitere Projektionen:**

Es gibt verschiedene weitere Projektionen, die zur Veranschaulichung der Erfindung eingesetzt werden. Die entsprechenden Projektionen sind in der folgenden Tabelle erläutert.

| Achskreuzseitenprojektion | Der Achskreuzseitenprojektionsvektor (siehe z.B. Fig. 4B) sei derjenige zum Gemeinlot und zur Rotationsachse R2 des Werkstücks 50, 70 senkrechte Vektor, der mit dem Geschwindigkeitsvektor $\vec{v}_2$ des berührenden Werkstückpunktes einen spitzen Winkel einschließt. Dann wird die Betrachtung von Werkstück 50, 70 und Wälzschälwerkzeug 100 in Richtung dieses Achskreuzseitenprojektionsvektors als Achskreuzseitenprojektion bezeichnet. In der Achskreuzseitenprojektion verlaufen die projizierten Rotationsachsen R1 und R2 parallel zueinander. |
|---|---|
| Berührebenenseitenprojektion | Die Betrachtung von Werkstück 50, 70 und Wälzschälwerkzeug 100 in Richtung des Geschwindigkeitsvektors $\vec{v}_2$ des berührenden Werkstückpunktes wird als Berührebenenseitenprojektion (siehe z.B. Fig. 4B) bezeichnet. |

Die folgende Gleichung [1] stellt für nicht-plane Verzahnungen den Zusammenhang zwischen den die räumliche Anordnung der Rotationsachsen R1 und R2 beschreibenden Winkeln her und ist damit für die Umrechnung der einzelnen Größen wichtig:

$$\cos(\Sigma) = \cos(\Sigma_{eff}) \cdot \cos(\delta) \qquad\qquad [1]$$

In dieser verallgemeinerten Konstellation wird der Achskreuzwinkel $\Sigma$ in den effektiven Achskreuzwinkel $\Sigma_{eff}$ und den Neigungswinkel $\delta$ zerlegt, wobei der effektive Achskreuzwinkel $\Sigma_{eff}$ die bestimmende Größe für die Erzeugung der relativen Schnittbewegung $\vec{v}_c$ zwischen dem sich drehenden Wälzschälwerkzeug 100 und dem sich drehenden Werkstück 50, 70 ist. Für plane Verzahnungen sind der effektive Achskreuzwinkel $\Sigma_{eff}$ und der Neigungswinkel $\delta$ wohl definiert, jedoch gilt nicht der Zusammenhang [1].

Gemäss Erfindung kann ein Neigungswinkel $\delta$ vorgegeben werden, dessen Betrag ungleich Null Grad ist, d.h. die Neigung der Werkzeugbezugsebene und damit des Wälzschälwerkzeugs 100 bezüglich der Berührebene (die durch die beiden Geschwindigkeitsvektoren $\vec{v}_2$ und $\vec{v}_1$ aufgespannt wird) ist negativ oder positiv.

Vorzugsweise liegt bei allen Ausführungsformen der effektive Achskreuzwinkel $\Sigma_{eff}$ in den folgenden Bereichen: $- 60° \leq \Sigma_{eff} < 0$ und $0 < \Sigma_{eff} \leq 60°$.

Gemäss Erfindung weist das Wälzschälwerkzeug 100 bei allen Ausführungsformen Schneiden auf, die in Form von Schneidzähnen 111 ausgeprägt sind, die gerade oder schräg nach aussen ragen, wie z.B. in den Figuren 13, 14 und 15 zu erkennen. Die Spanflächen der Schneidzähne 111 sind im Wesentlichen bezüglich der Stirnfläche des sich verjüngenden Wälzschälwerkzeugs 100 ausgeprägt.

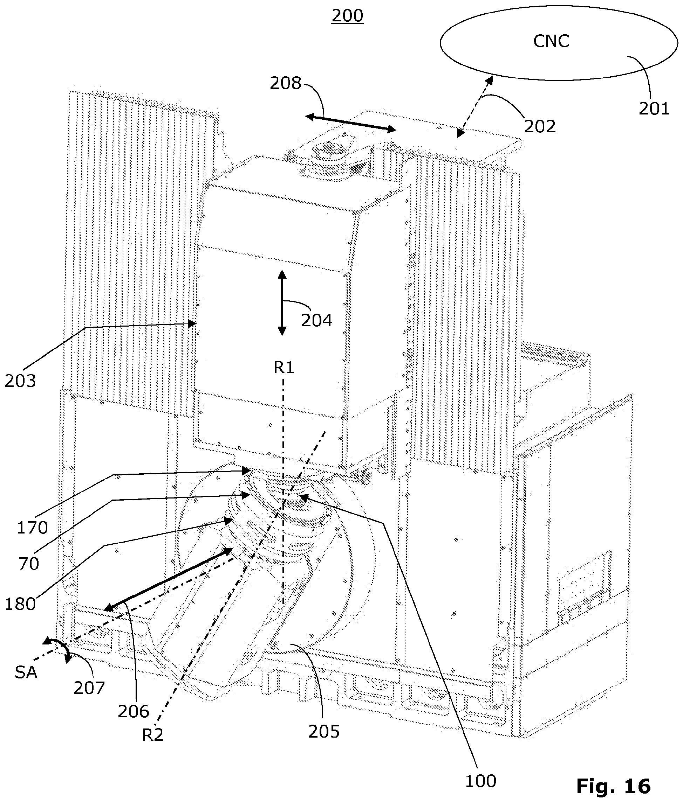

Gemäss Erfindung weist das Wälzschälwerkzeug 100 bei allen Ausführungsformen die Form eines Schneidrads, vorzugsweise die Form eines Scheibenschneidrads, eines Schaftschneidrads oder Scheiben-Glockenschneidrads (z.B. gemäss DIN 3972 oder DIN 5480) auf. Bei allen Ausführungsformen kann zwischen dem Wälzschälwerkzeug 100 und der eigentlichen Werkzeugspindel 170, die in Fig. 16 zu erkennen ist, ein Adapterelement sitzen.

Vorzugsweise hat das Wälzschälwerkzeug 100 bei allen Ausführungsformen eine Mantelform oder Grundform mit einer Kollisionskontur, die dazu ausgelegt ist Kollisionen zwischen dem Wälzschälwerkzeug 100 und dem Werkstück 50, 70 beim Gleichlauf-Wälzschälen zu vermeiden.

In Fig. 15 ist ein Wälzschälwerkzeug 100 gezeigt, das die Form eines Schneidrads hat. Es handelt sich hier um ein Vollwerkzeug, bei dem die Schneidzähne 111 Teil des Wälzschälwerkzeugs 100 sind. Das Wälzschälwerkzeug 100 weist hier 25 Schneidzähne 111 auf, von denen in Fig. 15 einer mit einem Bezugszeichen versehen ist. Der Grundkörper des Wälzschälwerkzeugs 100 hat die Form einer Kegelstumpfscheibe oder eines kegelstumpfförmigen Tellers.

Das Gleichlauf-Wälzschälverfahren kann an einem unverzahnten Werkstück 50, 70, vorzugsweise im Rahmen einer Weichbearbeitung, zum Einsatz kommen.

Bisher wurde das Gleichlaufwälzschälen anhand von Beispielen beschrieben, bei denen die Lücken oder Nuten ins Volle gefertigt wurden. D.h. bisher wurde das Wälzschälwerkzeug 100 stets auf der vollen Tiefe durch da Material des Werkstücks, 50, 70 geführt.

Das Gleichlauf-Wälzschälverfahren wird vorteilhafter Weise an einem vorverzahnten Werkstück 50, 70, vorzugsweise nach einer Weichbearbeitung, zum Einsatz gebracht. D.h. das Gleichlauf-Wälzschälverfahren wird vorzugsweise zur Hart- oder Fertigbearbeitung eingesetzt. Das entsprechende Gleichlauf-Wälzschälverfahren wird hier auch als Hart-Wälzschälen bezeichnet.

Das Gleichlauf-Wälzschälverfahren kann aber auch im Rahmen eines Mehrschnitt-Wälzschälverfahrens zum Einsatz kommen.

Es sind im Rahmen eines solchen Mehrschnitt-Wälzschälverfahrens mehrere Ansätze möglich. Entweder können die periodischen Strukturen am Werkstück 50, 70 in zwei oder mehr als zwei Schnittphasen erzeugt werden. Während einer ersten Schnittphase kann im Gleichlauf-Wälzschälen z.B. eine Lücke oder Nut auf eine Tiefe von 50% geschnitten werden. Dann wird das Wälzschälwerkzeug 100 radial tiefer bis zur vollen Tiefe zugestellt und in der zweiten Schnittphase kann die Lücke oder Nut dann auf die volle Tiefe geschnitten werden.

Es ist aber auch möglich, Lücke oder Nut im konventionellen Gegenlauf-Wälzschälverfahren auf eine bestimmte Tiefe, z.B. auf 70% Tiefe, zu schneiden, um diese Lücke oder Nut im Gleichlauf-Wälzschälverfahren auf die volle Tiefe zu bringen. Vor dem Wechsel vom Gegenlauf-Wälzschälverfahren zum Gleichlauf-Wälschälzverfahren wird das Wälzschälwerkzeug 100 radial tiefer bis zur vollen Tiefe zugestellt. Der Ansatz des kombinierten Gegenlauf-Wälzschälens und Gleichlauf-Wälzschälens ist besonders vorteilhaft, da im Gegenlauf-Wälzschälverfahren grosse Materialvolumina abgenommen werden können, um dann im Gleichlauf-Wälzschälverfahren mit weniger Materialabtrag Lücken oder Nuten mit guter Oberflächeneigenschaft zu fertigen. Das beschriebene Verfahren kann beim Gegenlauf-Wälzschälen und Gleichlauf-Wälzschälen mit ein und demselben Wälzschälwerkzeug 100 ausgeführt werden.

Das Gleichlauf-Wälzschälverfahren der Erfindung kann auch im Rahmen eines Semi-Completing-Ansatzes zur Anwendung kommen, bei dem die beiden Flanken in getrennten Schnittphasen erzeugt werden, zwischen denen beispielsweise eine Verdrehung des Werkstücks erfolgt 50, 70. Beim entsprechenden Semi-Completing können z.B. die auslaufenden Flanken im Gegenlauf-Wälzschälen und die einlaufenden Flanken im Gleichlauf-Wälzschälen erzeugt werden.

Eine Maschine 200, die zum erfindungsgemässen Gleichlauf-Wälzschälen ausgelegt ist, weist eine CNC-Steuerung 201 auf, die eine Koppelung der Achsen R1 und R2, respektive eine Koordination der Achsbewegungen ermöglicht. Die CNC-Steuerung 201 kann Teil der Maschine 200 sein, oder sie kann extern ausgeführt und zur kommunikationstechnischen Verbindung 202 mit der Maschine 200 ausgelegt sein. Die entsprechende Maschine 200 umfasst einen sogenannten "elektronischen Getriebezug", respektive eine "elektronische oder steuerungstechnische Achskopplung" um eine Relativbewegung des Wälzschälwerkzeugs 100 in Bezug zu dem innenverzahnten, wälzgeschälten Werkstück 70 auszuführen. Das gekoppelte Bewegen des Wälzschälwerkzeugs 100 und des Werkstücks 70 wird so ausgeführt, dass sich während der Bearbeitungsphase eine Relativbewegung zwischen dem Wälzschälwerkzeug 100 und dem Werkstück 70 ergibt, die der Relativbewegung eines Schraubradgetriebes entspricht. Der elektronische Getriebezug, respektive die elektronische oder steuerungstechnische Achskopplung sorgen für eine Drehzahlsynchronisierung von mindestens zwei Achsen der Maschine 200. Hierbei sind mindestens die Rotationsachse R1 der Werkzeugspindel 170 mit der Rotationsachse R2 der Werkstückspindel 180 gekoppelt. Ausserdem ist vorzugsweise bei allen Ausführungsformen die Rotationsachse R2 der Werkstückspindel 170 mit dem Axialvorschub in Richtung R2 gekoppelt. Die vertikale Linearbewegung eines Linearvorschubs 203 ist in Fig. 16 durch einen Doppelpfeil 204 dargestellt. Zusätzlich kann die Werkstückspindel 180 samt Teller 205 parallel zu einer Schwenkachse SA linear verschoben werden, wie durch einen Doppelpfeil 206 dargestellt. Der Axialvorschub erfolgt parallel zur Rotationsachse R2 und setzt sich zusammen aus einem vertikalen Bewegungsanteil 204, der durch den Linearvorschub 203 erzeugt wird, und einen horizontalen Bewegungsanteil, der durch eine lineare Bewegung 208 erzeugt wird. Ausserdem kann der Teller 205 samt Werkstückspindel 180 und Werkstück 170 um die Schwenkachse SA gedreht werden, wie durch einen Doppelpfeil 207 dargestellt.

Vorzugsweise kommt eine Maschine 200 zum Einsatz, die auf einer Vertikalanordnung basiert, wie in Fig. 16 gezeigt. Bei einer solchen Vertikalanordnung sitzt entweder das Wälzschälwerkzeug 100 samt Werkzeugspindel 170 oberhalb des Werkstücks 50, 70 samt Werkstückspindel 180, oder umgekehrt. Die Späne, die beim Wälzschälen entstehen, fallen aufgrund der Schwerkraftwirkung nach unten und können z.B. über ein Spanbett, das nicht gezeigt ist, entfernt werden.

Weiterhin sorgt eine Maschine 200, die zum erfindungsgemässen Gleichlauf-Wälzschälen ausgelegt ist, für die richtigen komplexen geometrischen und kinematischen Maschineneinstellungen und Achsbewegungen der genannten Achsen. Vorzugsweise hat die Maschine bei allen Ausführungsformen sechs Achsen. Fünf dieser Achsen wurden bereits beschrieben. Als sechste Achse kann eine Achse vorgesehen sein, die eine lineare Relativbewegung des Wälzschälwerkzeug 100 gegenüber dem Werkstücks 50, 70 ermöglicht. Diese lineare Relativbewegung ist in Fig. 16 durch den Doppelpfeil 208 angedeutet.

Gemäss Erfindung werden Prozessparameter so durch die CNC-Steuerung 201 vorgegeben, dass die Vektoren der effektiven Schnittgeschwindigkeit $\vec{v}_{ce}$ und der Vorschubgeschwindigkeit $\vec{v}_{ve}$ einen stumpfen Winkel $\eta$ einschließen. Die Schnittgeschwindigkeit $\vec{v}_{ce}$ respektive der Schnittgeschwindigkeitsvektor $\vec{v}_{ce}$ ergibt sich im Wesentlichen durch die Drehzahl $n_1$, $n_2$ des Wälzschraubersatzgetriebes und durch den Betrag des Achskreuzwinkels $\Sigma$.

Das Gleichlauf-Wälzschälverfahren kann bei allen Ausführungsformen trocken oder nass angewendet werden, wobei die Verwendung des Gleichlauf-Wälzschälens im Trockenen bevorzugt ist.

Das Einsatzspektrum des Gleichlauf-Wälzschälverfahrens ist groß und erstreckt sich auf die Anwendung bei der Herstellung verschiedenster rotationssymmetrischer periodischer Strukturen.

Bezugszeichenliste:

| | |
|---|---|
| Stossrad | 1 |
| Werkstück | 2 |
| Zahnkopf | 4 |
| Zahnbrust | 5 |
| Schneidzahn | 6 |
| Schneide | 6.1 |
| Zahnnut eines Werkstücks 8 | 7 |
| Werkstück | 8 |
| Bereich | 9 |
| Wälzschälwerkzeug | 10 |
| Wanne, Trog | 11 |
| Erzeugendenlinie | 12 |
| kritischer Bereich | 13 |
| | |
| (wälzgeschältes) Werkstück | 20 |
| Zahn | 21 |
| Zahnlücke | 22 |
| Stirnseite | 23 |
| Spanfläche | 24 |
| | |
| (wälzgeschältes) Werkstück | 50 |
| Zahn | 51 |
| Zahnlücke | 52 |
| Stirnseite | 53 |
| Spanfläche | 54 |
| | |
| (innenverzahntes, wälzgeschältes) Werkstück | 70 |
| | |
| Wanne, Trog | 80 |
| kritischer Bereich | 81 |
| Erzeugendenlinie | 82 |
| grauer Bereich der Wanne 80 | 83 |
| vorderster Wannenrand | 84 |
| | |
| Wälzschälwerkzeug | 100 |
| Schneidzähne | 111 |
| | |
| Messerstäbe | 120 |
| | |
| Werkzeugspindel | 170 |
| | |
| Werkstückspindel | 180 |
| | |
| Maschine | 200 |
| CNC-Steuerung | 201 |
| kommunikationstechnische Verbindung | 202 |

(fortgesetzt)

| | |
|---|---|
| Linearvorschub | 203 |
| Vertikaler Bewegungsanteil | 204 |
| Teller | 205 |
| Linearverschiebung | 206 |
| Drehbewegung | 207 |
| lineare Relativbewegung | 208 |
| konstruktiver Freiwinkel | $\alpha_{Ko}$ |
| Achskreuzpunkt | AK |
| Auslegungspunkt | AP |
| Berührpunkt | BP |
| Schrägungswinkel des Werkzeugs | $\beta_1$ |
| Schrägungswinkel des Werkstücks | $\beta_2$ |
| Neigungswinkel | $\delta$ |
| Durchmesser des Werkstückwälzkreises | $d_{w2}$ |
| Spanwinkel | $\gamma_s$ |
| Winkel | $\eta$ |
| Berührebenennormale | $\vec{n}$ |
| Werkzeugdrehzahl | $n_1$ |
| Werkstückdrehzahl | $n_2$ |
| Normale | N1 |
| Rotationsachse des Werkzeugs (Werkzeugachse) | R1 |
| Berührradiusvektor des Werkzeugs 10 | $\vec{r}_1$ |
| Rotationsachse des Werkstücks (Werkstückachse) | R2 |
| Berührradiusvektor des Werkstücks 50, 70 | $\vec{r}_2$ |
| Schwenkachse | SA |
| Hubbewegung | $s_{hx}$ |
| Betrag des Axialvorschubs | $s_{ax}$ |
| Axialvorschubvektor | $\vec{s}_{ax}$ |
| Differentialvorschub | $s_D$ |
| Radialvorschub | $s_{rad}$ |
| Schneidenpunkt | SP1 |
| Schnittrichtung | SR |
| Effektiver Achskreuzwinkel | $\Sigma_{eff}$ |
| Achskreuzwinkel | $\Sigma$ |
| tiefster Punkt | TP |
| Betrag der Schnittgeschwindigkeit | $v_c$ |
| Betrag der effektiven Schnittgeschwindigkeit | $v_{ce}$ |
| Schnittgeschwindigkeitsvektor | $\vec{v}_c$ |
| Effektiver Schnittgeschwindigkeitsvektor | $\vec{v}_{ce}$ |
| Betrag des Geschwindigkeitsvektors Wälzschälwerkzeug | $v_1$ |
| Geschwindigkeitsvektor Wälzschälwerkzeug | $\vec{v}_1$ |

(fortgesetzt)

| | |
|---|---|
| Betrag des Geschwindigkeitsvektors Werkstück | $v_2$ |
| Geschwindigkeitsvektor Werkstück | $\vec{v}_2$ |
| Vorschubrichtung | VR |
| Betrag der effektiven Vorschubgeschwindigkeit | $v_{ve}$ |
| Effektiver Vorschubgeschwindigkeitsvektor | $v_{ve}$ |
| Rotation um die Achse R1 | $\omega 1$ |
| Rotation um die Achse R2 | $\omega 2$ |

**Patentansprüche**

1. Verfahren zum Wälzschälen eines Werkstücks (50; 70) mit rotationssymmetrischer, periodischer Struktur unter Einsatz eines Wälzschälwerkzeugs (100), das mehrere Schneiden (111) umfasst, mit den folgenden Schritten:

   - Drehen des Wälzschälwerkzeugs (100) um eine erste Rotationsachse (R1),
   - gekoppeltes Drehen des Werkstücks (50; 70) um eine zweite Rotationsachse (R2),
   - Ausführen einer axialen Vorschubbewegung des Wälzschälwerkzeugs (100) in Bezug zu dem Werkstück (50; 70) in einer Richtung parallel zur zweiten Rotationsachse (R2),
   wobei die beiden Rotationsachsen (R1, R2) während des Wälzschälens mit einem Achskreuzwinkel ($\Sigma$) windschief relativ zueinander angestellt sind, wobei sich an den Schneiden (111) eine effektive Schnittgeschwindigkeit ($v_{ce}$) und aufgrund der Vorschubbewegung eine effektive Vorschubgeschwindigkeit ($v_{ve}$) ergeben, **dadurch gekennzeichnet, dass** die Richtung der effektiven Schnittgeschwindigkeit ($\vec{v}_{ce}$) und die Richtung der effektiven Vorschubgeschwindigkeit ($v_{ve}$) einen stumpfen Winkel ($\eta$) einschließen, der in einem Bereich liegt, der grösser ist als 90 Grad und kleiner gleich 180 Grad, und dass
   sich ein effektiver Spanwinkelverlauf am Schneidenkopf des Wälzschälwerkzeugs (100) ergibt, bei dem der Betrag des effektiven Spanwinkels (ys) im Bereich zwischen 60 und -10 Grad liegt.

2. Verfahren nach Anspruch 1, wobei sich das Verfahren durch eine einer Schnittrichtung (SR) entgegengesetzte Vorschubrichtung (VR) auszeichnet, die im Wesentlichen durch die axiale Vorschubbewegung des Wälzschälwerkzeugs (100) relativ zu dem Werkstück (50; 70) erzeugt wird.

3. Verfahren nach Anspruch 1 oder 2, **dadurch gekennzeichnet, dass** sich eine Vorschubbewegung ergibt aus einem Axialvorschub ($s_{ax}$) und einem Differentialvorschub ($s_D$), wobei der Differentialvorschub ($s_D$) je nach Werkstück (50; 70) auch Null sein kann.

4. Verfahren nach einem der vorhergehenden Ansprüche, **dadurch gekennzeichnet, dass** sich ein effektiver Achskreuzwinkel ($\Sigma_{eff}$) ergibt, der in einem der folgenden Bereiche liegt: $-60° \leq \Sigma_{eff} < -10$ und $10 < \Sigma_{eff} \leq 60°$.

5. Verfahren nach einem der vorhergehenden Ansprüche, **dadurch gekennzeichnet, dass** es sich bei der rotationssymmetrischen, periodischen Struktur um eine Innenverzahnung oder eine Aussenverzahnung des Werkstücks (50; 70) handelt.

6. Verfahren nach einem der vorhergehenden Ansprüche, **dadurch gekennzeichnet, dass** es an einem unverzahnten Werkstück (50; 70), vorzugsweise bei einer Weichbearbeitung, zum Einsatz kommt.

7. Verfahren nach einem der vorhergehenden Ansprüche 1 - 5, **dadurch gekennzeichnet, dass** es an einem vorverzahnten Werkstück (50; 70), vorzugsweise nach einer Weichbearbeitung, zum Einsatz kommt.

8. Verfahren nach einem der vorhergehenden Ansprüche 1 - 5, **dadurch gekennzeichnet, dass** es im Rahmen eines Mehrschnitt-Wälzschälverfahrens zum Einsatz kommt.

9. Vorrichtung (200) zum Wälzschälen eines Werkstücks (50; 70) mit rotationssymmetrischer, periodischer Struktur unter Einsatz eines Wälzschälwerkzeugs (100), das mehrere Schneiden (111) umfasst, mit:

- einer Werkzeugspindel (170) zum Befestigen des Wälzschälwerkzeugs (100),
- einer Werkstückspindel (180) zum Befestigen des Werkstücks (50; 70),
- numerisch kontrollierten Antrieben zum gekoppelten Ausführen einer Relativbewegung und zum gekoppelten Rotieren des Wälzschälwerkzeugs (100) samt Werkzeugspindel (170) um eine erste Rotationsachse (R1) und des Werkstücks (50; 70) samt Werkstückspindel (180) um eine zweite Rotationsachse (R2), wobei die beiden Rotationsachsen (R1, R2) während des Wälzschälens mit einem Achskreuzwinkel ($\Sigma$) windschief relativ zueinander angestellt sind und eine axiale Vorschubbewegung des Wälzschälwerkzeugs (100) in Bezug zu dem Werkstück (50; 70) in einer Richtung parallel zur zweiten Rotationsachse (R2) ausgeführt wird, wobei sich durch Einsatz der numerisch kontrollierten Antriebe an den Schneiden (111) eine effektive Schnittgeschwindigkeit ($v_{ce}$) und aufgrund der Vorschubbewegung eine effektive Vorschubgeschwindigkeit ($v_{ve}$) ergeben, **dadurch gekennzeichnet, dass** die Richtung der effektiven Schnittgeschwindigkeit ($\vec{v}_{ce}$) und die Richtung der effektiven Vorschubgeschwindigkeit ($v_{ve}$) einen stumpfen Winkel ($\eta$) einschließen, der in einem Bereich liegt, der grösser ist als 90 Grad und kleiner gleich 180 Grad, und dass sich ein effektiver Spanwinkelverlauf am Schneidenkopf des Wälzschälwerkzeugs (100) ergibt, bei dem der Betrag des effektiven Spanwinkels (ys) im Bereich zwischen 60 und -10 Grad liegt.

10. Vorrichtung (200) nach Anspruch 9, **dadurch gekennzeichnet, dass** eine einer Schnittrichtung (SR) entgegengesetzte Vorschubrichtung (VR) vorgebbar ist, die im Wesentlichen durch die axiale Vorschubbewegung des Wälzschälwerkzeugs (100) relativ zu dem Werkstück (50; 70) erzeugt wird.

11. Vorrichtung (200) nach Anspruch 9, **dadurch gekennzeichnet, dass** es sich um eine Vorrichtung (200) handelt, die zur Bearbeitung eines unverzahnten Werkstücks (50; 70), vorzugsweise zur Weichbearbeitung eines unverzahnten Werkstücks (50; 70), ausgelegt ist.

12. Vorrichtung (200) nach Anspruch 9, **dadurch gekennzeichnet, dass** es sich um eine Vorrichtung (200) handelt, die zur Bearbeitung eines vorverzahnten Werkstück (50; 70), vorzugsweise nach einer Weichbearbeitung, ausgelegt ist.

13. Vorrichtung (200) nach Anspruch 12, **dadurch gekennzeichnet, dass** es sich um eine Vorrichtung (200) handelt, die zur Bearbeitung eines Werkstücks (50; 70) mit einer Mehrschnitt-Wälzschälstrategie ausgelegt ist.

14. Vorrichtung (200) nach einem der Ansprüche 9 bis 13, **dadurch gekennzeichnet, dass** es sich bei der Vorrichtung (200) um eine sechs-achsige Maschine handelt.

15. Vorrichtung (200) nach einem der Ansprüche 9 bis 13, **dadurch gekennzeichnet, dass** es sich bei dem Wälzschälwerkzeug (100) um ein Vollwerkzeug oder um ein Stabmesser-Schälrad oder um ein Werkzeug mit Schneidplatten handelt.

16. Vorrichtung (200) nach einem der Ansprüche 9 bis 13, **dadurch gekennzeichnet, dass** die numerische Steuerung (201) zum Ausführen des Verfahrens nach einem der Ansprüche 1 bis 8 ausgelegt ist.

**Claims**

1. Method for skiving a workpiece (50; 70) with a rotationally symmetrical, periodic structure using a skiving tool (100) comprising a plurality of cutters (111), comprising the following steps:

- rotating the skiving tool (100) about a first axis of rotation (R1),
- coupled rotation of the workpiece (50; 70) about a second axis of rotation (R2),
- performing an axial feed motion of the skiving tool (100) with respect to the workpiece (50; 70) in a direction parallel to the second axis of rotation (R2),
wherein the two axes of rotation (R1, R2) are skewed relative to one another by an axis cross angle ($\Sigma$) during the skiving process, wherein an effective cutting speed ($v_{ce}$) is produced at the cutters (111) and an effective feed speed ($v_{ve}$) is produced as a result of the feed movement, **characterized in that** the direction of the effective cutting speed ($\vec{v}_{ce}$) and the direction of the effective feed speed ($\vec{v}_{ve}$) enclose an obtuse angle ($\eta$) which

lies in a range which is greater than 90 degrees and less than or equal to 180 degrees, and **in that** an effective rake angle course at the cutter head of the skiving tool (100) is obtained where the value of the effective rake angle (ys) is in the range between 60 and -10 degrees.

2. Method according to claim 1, wherein the method is **characterized by** a feed direction (VR) opposite to a cutting direction (SR), which feed direction (VR) is generated essentially by the axial feed movement of the skiving tool (100) relative to the workpiece (50; 70).

3. Method according to claim 1 or 2, **characterized in that** a feed movement results from an axial feed ($s_{ax}$) and a differential feed ($S_D$), wherein the differential feed ($S_D$) can also be zero depending on the workpiece (50; 70).

4. Method according to one of the preceding claims, **characterized in that** an effective axis cross angle ($\Sigma_{eff}$) is obtained which is within one of the following ranges: $-60° \leq \Sigma_{eff} < -10$ and $10 < \Sigma_{eff} \leq 60°$.

5. Method according to one of the preceding claims, **characterized in that** the rotationally symmetrical, periodic structure is an internal toothing or an external toothing of the workpiece (50; 70).

6. Method according to one of the preceding claims, **characterized in that** it is used on an untoothed workpiece (50; 70), preferably in soft machining.

7. Method according to one of the preceding claims 1 - 5, **characterized in that** it is used on a pre-toothed workpiece (50; 70), preferably after soft machining.

8. Method according to one of the preceding claims 1 - 5, **characterized in that** it is used in the context of a multiple-cut skiving process.

9. Apparatus (200) for skiving a workpiece (50; 70) with a rotationally symmetrical, periodic structure by using a skiving tool (100) comprising a plurality of cutters (111), having:

   - a tool spindle (170) for fixing the skiving tool (100),
   - a workpiece spindle (180) for fixing the workpiece (50; 70),
   - numerically controlled drives for coupled execution of a relative movement and for coupled rotation of the skiving tool (100) together with the tool spindle (170) about a first axis of rotation (R1) and of the workpiece (50; 70) together with the workpiece spindle (180) about a second axis of rotation (R2), wherein the two axes of rotation (R1, R2) are skewed relative to each other by an axis crossing angle ($\Sigma$) during the skiving process, and an axial feed movement of the skiving tool (100) in relation to the workpiece (50; 70) is carried out in a direction parallel to the second axis of rotation (R2),
   wherein an effective cutting speed ($v_{ce}$) is obtained by using the numerically controlled drives on the cutters (111) and an effective feed speed ($v_{ve}$) is obtained due to the feed movement, **characterized in that** the direction of the effective cutting speed ($\vec{v}_{ce}$) and the direction of the effective feed speed ($\vec{v}_{ve}$) include an obtuse angle ($\eta$) which is in a range greater than 90 degrees and less than or equal to 180 degrees, and **in that** an effective rake angle course is obtained at the cutting head of the skiving tool (100) at which the amount of the effective rake angle (ys) is in the range between 60 and -10 degrees.

10. Apparatus (200) according to claim 9, **characterized in that** a feed direction (VR) opposite to a cutting direction (SR) can be predetermined, which feed direction (VR) is generated substantially by the axial feed movement of the skiving tool (100) relative to the workpiece (50; 70).

11. Apparatus (200) according to claim 9, **characterized in that** it is an apparatus (200) which is designed for machining an untoothed workpiece (50; 70), preferably for soft machining an untoothed workpiece (50; 70).

12. Apparatus (200) according to claim 9, **characterized in that** it is an apparatus (200) which is designed for machining a pre-toothed workpiece (50; 70), preferably after soft machining.

13. Apparatus (200) according to claim 12, **characterized in that** it is an apparatus (200) designed for machining a workpiece (50; 70) with a multi-cut skiving strategy.

**14.** Apparatus (200) according to one of claims 9 to 13, **characterized in that** the apparatus (200) is a six-axis machine.

**15.** Apparatus (200) according to one of claims 9 to 13, **characterized in that** the skiving tool (100) is a solid tool or a bar-blade skiving wheel or a tool with cutting inserts.

**16.** Apparatus (200) according to one of claims 9 to 13, **characterized in that** the numerical control (201) is designed to carry out the method according to one of claims 1 to 8.

**Revendications**

**1.** Procédé de taillage par développante d'une pièce à usiner (50 ; 70) présentant une structure périodique à symétrie de rotation à l'aide d'un outil de taillage par développante (100) comprenant plusieurs bords tranchants (111), comprenant les étapes suivantes consistant à :

- faire tourner l'outil de taillage par développante (100) autour d'un premier axe de rotation (R1),
- faire tourner de façon couplée la pièce à usiner (50 ; 70) autour d'un deuxième axe de rotation (R2),
- effectuer un mouvement d'avance axial de l'outil de taillage par développante (100) par rapport à la pièce à usiner (50 ; 70) dans une direction parallèle au deuxième axe de rotation (R2),
dans lequel les deux axes de rotation (R1, R2), pendant le taillage par développante, sont réglés de manière inclinée l'un par rapport à l'autre selon un angle de croisement ($\Sigma$), dans lequel il en résulte au niveau des bords tranchants (111) une vitesse de coupe effective ($V_{ce}$) et, du fait du mouvement d'avance, une vitesse d'avance effective ($V_{ve}$), **caractérisé en ce que** la direction de la vitesse ($\vec{v}_{ce}$) de coupe effective et la direction de la ($\vec{v}_{ve}$) vitesse d'avance effective englobent un angle obtus ($\eta$) qui est compris dans une plage supérieure à 90 degrés et inférieure ou égale à 180 degrés, et **en ce qu'**il en résulte un tracé d'angle de coupe effectif au niveau de la tête de coupe de l'outil de taillage par développante (100), pour lequel la valeur de l'angle de coupe effectif (ys) est comprise dans la plage entre 60 et -10 degrés.

**2.** Procédé selon la revendication 1, le procédé **se caractérisant par** une direction d'avance (VR) opposée à la direction de coupe (SR), laquelle direction d'avance étant produite essentiellement par le mouvement d'avance axial de l'outil de taillage par développante (100) par rapport à la pièce à usiner (50 ; 70).

**3.** Procédé selon la revendication 1 ou 2, **caractérisé en ce qu'**il résulte de l'avance axiale ($S_{ax}$) et de l'avance différentielle ($S_D$) un mouvement d'avance, l'avance différentielle ($S_D$) pouvant également être de zéro en fonction de la pièce à usiner (50 ; 70).

**4.** Procédé selon l'une des revendications précédentes, **caractérisé en ce qu'**il en résulte un angle de croisement effectif ($\Sigma_{eff}$) qui se situe dans l'une des plages suivantes : $- 60\,° \le \Sigma_{eff} < -10$ et $10 < \Sigma_{eff} \le 60\,°$.

**5.** Procédé selon l'une des revendications précédentes, **caractérisé en ce que** la structure périodique à symétrie de rotation est une denture interne ou une denture externe de la pièce à usiner (50 ; 70).

**6.** Procédé selon l'une des revendications précédentes, **caractérisé en ce qu'**il est utilisé sur une pièce à usiner sans denture (50 ; 70), de préférence dans le cadre d'un usinage doux.

**7.** Procédé selon l'une des revendications précédentes 1 à 5, **caractérisé en ce qu'**il est utilisé sur une pièce à usiner prétaillée (50 ; 70), de préférence après un usinage doux.

**8.** Procédé selon l'une des revendications précédentes 1 à 5, **caractérisé en ce qu'**il est utilisé dans le cadre d'un procédé de taillage par développante à coupes multiples.

**9.** Dispositif (200) pour tailler par développante une pièce à usiner (50 ; 70) présentant une structure périodique à symétrie de rotation à l'aide d'un outil de taillage par développante (100) comprenant plusieurs bords tranchants (111), comprenant :

- une broche d'outil (170) pour fixer l'outil de taillage par développante (100),
- une broche de pièce (180) pour fixer la pièce à usiner (50 ; 70),

- une commande numérique pour exécuter de façon couplée un mouvement relatif et pour faire tourner de façon couplée l'outil de taillage par développante (100) avec la broche d'outil (170) autour d'un premier axe de rotation (R1), et la pièce à usiner (50 ; 70) avec la broche d'outil (180) autour d'un deuxième axe de rotation (R2), les deux axes de rotation (R1, R2), pendant le taillage par développante, étant réglés inclinés l'un par rapport à l'autre selon un angle de croisement ($\Sigma$), et dans lequel il est réalisé un mouvement d'avance axial de l'outil de taillage par développante (100) par rapport à la pièce à usiner (50 ; 70) dans une direction parallèle au deuxième axe de rotation (R2),

dans lequel l'utilisation de la commande numérique permet d'obtenir au niveau des bords tranchants (111) une vitesse de coupe effective ($V_{ce}$) et, du fait du mouvement d'avance, une vitesse d'avance effective ($V_{ve}$), **caractérisé en ce que** la direction de la ($\vec{v}_{ce}$) vitesse de coupe effective et la direction ($\vec{v}_{ve}$) de la vitesse d'avance effective englobent un angle obtus ($\eta$) compris dans la plage supérieure à 90 degrés et inférieure ou égale à 180 degrés, et **en ce qu'**il en résulte un tracé d'angle de coupe effectif au niveau de la tête de coupe de l'outil de taillage par développante (100), la valeur de l'angle de coupe effectif (Ys) étant comprise dans la plage entre 60 et - 10 degrés.

10. Dispositif (200) selon la revendication 9, **caractérisé en ce qu'**il peut être prédéfini une direction d'avance (VR) opposée à la direction de coupe (SR), laquelle direction d'avance étant produite essentiellement par le mouvement d'avance axial de l'outil de taillage par développante (100) par rapport à la pièce à usiner (50 ; 70).

11. Dispositif (200) selon la revendication 9, **caractérisé en ce qu'**il s'agit d'un dispositif (200) conçu pour usiner une pièce à usiner sans denture (50 ; 70), de préférence pour un usinage doux d'une pièce à usiner sans denture (50 ; 70).

12. Dispositif (200) selon la revendication 9, **caractérisé en ce qu'**il s'agit d'un dispositif (200) conçu pour usiner une pièce à usiner prétaillée (50 ; 70), de préférence après un usinage doux.

13. Dispositif (200) selon la revendication 12, **caractérisé en ce qu'**il s'agit d'un dispositif (200) conçu pour usiner une pièce à usiner (50 ; 70) avec une stratégie de taillage par développante à coupes multiples.

14. Dispositif (200) selon l'une des revendications 9 à 13, **caractérisé en ce que** le dispositif (200) est une machine à six axes.

15. Dispositif (200) selon l'une des revendications 9 à 13, **caractérisé en ce que** l'outil de taillage par développante (100) est un outil complet ou un pignon de décolletage à lame ou encore un outil avec des plaquettes de coupe.

16. Dispositif (200) selon l'une des revendications 9 à 13, **caractérisé en ce que** la commande numérique (201) est conçue pour exécuter le procédé selon l'une des revendications 1 à 8.

Fig. 1

**Fig. 2A**

**Fig. 2B**

**Fig. 4A**

**Fig. 4B**

**Fig. 5A**

**Fig. 5B**

**Fig. 5C**

**Fig. 6**

**Fig. 7**

Fig. 8B

Fig. 8A

$\vec{v}_{ve}$

η

$\vec{v}_{ce}$

**Fig. 9B**

50

83

84

111

AP

$\vec{v}_{ve}$

82

SP1

54

$\vec{v}_{ce}$

82

51

SR

80

VR

**Fig. 9A**

52

**Fig. 10A**

**Fig. 10B**

**Fig. 10C**

**Fig. 11A**

**Fig. 11B**

**Fig. 12A**

**Fig. 12B**

**Fig. 13**

**Fig. 14**

R1  R2  100

70

ω1

111

VR˙SR

ω2

**Fig. 15**

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 243514
- WO 2012098002 A1
- DE 3915976 A1
- WO 2010060733 A1